# EUROPEAN PATENT APPLICATION

(11) **EP 4 607 442 A1**
(43) Date of publication of application: **27.08.2025**
(21) Application number: 23879424.2
(22) Date of filing: 27.07.2023
(51) Int. Cl.: G06Q 50/06

(54) **CONDUIT CONSTRUCTION MANAGEMENT SYSTEM, MANAGEMENT SERVER, CONDUIT CONSTRUCTION MANAGEMENT METHOD, AND CONDUIT CONSTRUCTION MANAGEMENT PROGRAM**

(30) Priority: 18.10.2022 JP 2022166821
(71) Applicant: Kubota Corporation, Osaka 556-8601 (JP)
(72) Inventor: KISHI Shozo, Amagasaki-shi, Hyogo 660-0095 (JP); IDOMOTO Yasushi, Amagasaki-shi, Hyogo 660-0095 (JP); YAMASHITA Akira, Amagasaki-shi, Hyogo 660-0095 (JP); KAGEYAMA Hayato, Amagasaki-shi, Hyogo 661-8567 (JP); ITO Kazuya, Amagasaki-shi, Hyogo 660-0095 (JP); KAWASE Ayumi, Amagasaki-shi, Hyogo 660-0095 (JP); HARADA Kazuma, Amagasaki-shi, Hyogo 660-0095 (JP)
(74) Representative: Müller-Boré & Partner Patentanwälte PartG mbB
(86) International application number: PCT/JP2023/027660
(87) International publication number: WO 2024/084771

(57) **Abstract**

A pipeline construction management system or the like that is able to efficiently data-process data of a construction plan and data of a construction actual performance and to efficiently manage construction actual performance is realized. A water pipe construction management system 1 that manages water pipe construction includes a management server 3, and an actual performance acquisition terminal 7 configured to be communicable with the management server 3 and to acquire data related to a construction actual performance corresponding to a management item for performing management of an actual performance in the water pipe construction, as actual performance information. The management server 3 includes a construction plan information generator 51 configured to generate construction plan information 327 by associating information related to a construction plan of a pipeline of water pipes that is a target of the water pipe construction with the management item, and a construction management information generator 55 configured to generate construction management information 328 by associating the actual performance information acquired by the actual performance acquisition terminal 7 with the construction plan information 327.

## Description

### Technical Field

The present invention relates to a pipeline construction management system, a management server, a pipeline construction management method, and a pipeline construction management program that manage pipeline construction.

### Background Art

In general, in a water business, recording of the content of construction is required in accordance with a progress of construction. The content to be recorded differs for each water utility company that orders construction. In addition, in the water business, it is necessary to create and submit documents in a form designated by each water utility company.

In the water business, for example, a shape, dimensions, and the like of a portion (hereinafter, referred to as "as-built" portion) where construction has been completed among locations where construction is planned are measured and recorded in accordance with predetermined standards. In addition, in the water business, a difference between a recorded measurement value and a design value of construction is recorded (hereinafter, referred to as "as-built management"). In addition, in the as-built management, an as-built management table in a predetermined format in which the design value, the measurement value, a difference between the measurement value and the design value, and the like are described is created.

In the as-built management, generally, a person in charge handwrites the measurement value measured at a construction site on a paper management table. In addition, the person in charge transcribed the measurement values record in the paper management table to a spreadsheet software or the like on a computer in an office or the like using a keyboard or the like, as data.

Therefore, in Patent Literature 1, it is proposed to support the creation of the as-built management table by inputting information on an inspection at the construction site required for construction management by a mobile terminal and collecting the input information by a server.

In addition, it is also required to perform photograph management in each step of construction. The number of photographs that need to be managed in construction is significantly large. Therefore, a lot of time is required for work of the photograph management. For example, the person in charge took a lot of time in work for associating the management position of the construction location with the photograph captured at the position. In addition, for photograph management, the person in charge captured a blackboard on which the content of construction was handwritten with a camera together with a construction status on the site. Therefore, it took time to capture photographs for photograph management.

Therefore, Patent Literatures 2 and 3 propose to electronically create the blackboard and generate a photographic image with an electronic blackboard.

### Citation List

### Patent Literatures

Patent Literature 1: Japanese Patent Application Laid-Open No. 2017-102935
Patent Literature 2: Japanese Patent Application Laid-Open No. 2008-225862
Patent Literature 3: Japanese Patent Application Laid-Open No. 2016-189199

### Summary of Invention

### Technical Problem

As described in Patent Literatures 1 to 3, in the as-built management, the photograph management, or the like, a document in which the construction plan and the construction actual performance are associated with each other is created.

The pipeline construction business has a plurality of steps. In addition, in the pipeline construction business, it is necessary to create a plurality of documents in each of the plurality of steps. Therefore, in the pipeline construction business, it is necessary to create many documents.

Further, in the pipeline construction business, the plurality of steps is performed by a plurality of pipeline construction contractors. Therefore, there are many pipeline construction contractors involved in the creation of the above-mentioned documents.

As described above, in the pipeline construction business, since there are many types of documents to be created and there are many pipeline construction contractors involved in creating the documents, when the documents are created using data of the construction plan and data of the construction actual performance, the amount of data to be processed is large and data processing is complicated. Therefore, in the pipeline construction business, a load on a worker who manages the construction actual performance including the document creation is large.

On the other hand, it is desired to efficiently perform data processing on data of the construction plan and data of the construction actual performance to more efficiently manage the construction actual performance.

An object of the present invention is to realize a pipeline construction management system or the like that can more efficiently manage the construction actual performance by efficiently data-processing data of the construction plan and data of the construction actual performance.

### Solution to Problem

A pipeline construction management system according to an embodiment of the present invention is a system that manages pipeline construction. The pipeline construction management system includes a management server; and an actual performance acquisition terminal configured to be communicable with the management server and to acquire data related to a construction actual performance corresponding to a management item for managing an actual performance in the pipeline construction, as actual performance information. The management server includes a construction plan information generator configured to generate construction plan information by associating information related to a construction plan of a pipeline that is a target of the pipeline construction with the management item, and a construction management information generator configured to generate construction management information by associating the actual performance information acquired by the actual performance acquisition terminal with the construction plan information (first configuration).

With the above-described configuration, the management server generates the construction plan information in which information related to the construction plan is associated with the management item for managing the actual performance.

In addition, the actual performance acquisition terminal acquires data related to the construction actual performance corresponding to the management item as the actual performance information. On the other hand, the management server generates the construction management information by associating the actual performance information with the construction plan information.

As a result, the construction plan information and the actual performance information can be associated with each other via the management item. Therefore, the data of the construction plan and the data of the construction actual performance are efficiently data-processed, and the construction actual performance can be managed more efficiently.

In the first configuration, the construction management information generator generates the construction management information by associating the construction plan information and the actual performance information with a management position that is a management target in the pipeline (second configuration).

As a result, a large amount of data of the construction plan information and the actual performance information can be efficiently organized, and comparison between the construction plan information and the actual performance information can be easily performed at each management position.

In the second configuration, the management server further includes a work information management list generator configured to create data of a list of actual performance information acquired in a predetermined construction period based on the construction management information (third configuration).

As a result, the actual performance information acquired in the predetermined construction period can be checked in a list. As a result, it is possible to present the acquisition of the actual performance information to be acquired to a person in charge for work in the site.

In the second configuration, the management server further includes a document creator configured to create a document in which the actual performance information is associated with each management position in accordance with a predetermined format based on the construction management information (fourth configuration).

As a result, it is possible to reduce a work load when creating the document for each management position based on the construction management information.

In the second configuration, the construction plan information includes a design value related to earthwork of the pipeline construction. The data related to the construction actual performance is a measurement value corresponding to the design value. The construction management information generator calculates a difference between the design value and the measurement value included in the actual performance information acquired by the actual performance acquisition terminal, and generates the construction management information by associating the design value, the measurement value, and the difference with the management position (fifth configuration).

As a result, the design value, the measurement value, and the difference between the design value and the measurement value, which are related to the earthwork in the pipeline construction, can be managed as the construction management information in association with the management position.

Therefore, it is possible to efficiently perform so-called as-built management of managing the design value, the measurement value, and the difference therebetween.

In the second configuration, the management item is a photograph. The actual performance acquisition terminal acquires captured photograph data as the actual performance information. The construction management information generator generates the construction management information by associating the photograph data captured by the actual performance acquisition terminal with the management position (sixth configuration).

As a result, the actual performance management (photograph management) by the photograph can be performed in association with the management position. Therefore, it is possible to efficiently perform the photograph management.

In the sixth configuration, the management server further includes an electronic blackboard creator configured to create an electronic blackboard to be added to the photograph data, based on the construction plan information. The construction management information generator generates the construction management information by associating the photograph data to which the electronic blackboard is added with the management position (seventh configuration).

As a result, the electronic blackboard added to the photograph data can be easily created by the management server. Therefore, it is possible to easily create the image data in which the electronic blackboard is added to the photograph data. Therefore, the image data in which the electronic blackboard is added can be efficiently managed.

In any one of the first to sixth configurations, each of the construction plan information, the actual performance information, and the construction management information is associated with a work range in the pipeline construction (eighth configuration).

With the above-described configuration, the pipeline construction can be planned and managed for each work range. Therefore, even in a case where the plan change occurs, it is possible to easily perform the plan change, the computation processing, and the like in accordance with the work range.

In the eighth configuration, the construction plan information is associated with work schedule information that is information related to a schedule of work in the work range, the actual performance acquisition terminal acquires the construction plan information from the management server, acquires actual performance information that corresponds to the construction plan information and is associated with the work range and the work schedule information, and then outputs the actual performance information to the management server, and the management server modifies the construction plan information based on the actual performance information output from the actual performance acquisition terminal (ninth configuration).

As described above, in the pipeline construction, the construction plan information can be easily modified by modifying the construction plan information using the actual performance information associated with the work range. That is, the plan for the pipeline construction can be easily changed in accordance with the work range.

A management server according to an embodiment of the present invention manages pipeline construction. The management server includes a construction plan information generator configured to generate construction plan information by associating information related to a construction plan of a pipeline that is a target of the pipeline construction with a management item for performing management of an actual performance in the pipeline construction; a communication section configured to be communicable with an actual performance acquisition terminal that acquires data related to a construction actual performance corresponding to the management item as actual performance information; and a construction management information generator configured to receive the actual performance information from the actual performance acquisition terminal, and generate construction management information by associating the received actual performance information with the construction plan information (tenth configuration).

With the above-described configuration, the management server generates the construction plan information in which the information related to the construction plan is associated with the management item.

In addition, the management server generates the construction management information by associating the actual performance information acquired by the actual performance acquisition terminal with the construction plan information.

As a result, the construction plan information and the actual performance information can be associated with each other via the management item. Therefore, the data of the construction plan and the data of the construction actual performance are efficiently data-processed, and the construction actual performance can be managed more efficiently.

In addition, as a result, the computation processing can be efficiently performed by using the management server and the actual performance acquisition terminal.

In the tenth configuration, the construction management information generator generates the construction management information by associating the construction plan information and the actual performance information with a management position that is a management target in the pipeline (eleventh configuration).

As a result, a large amount of data of the construction plan information and the actual performance information can be efficiently organized, and comparison between the construction plan information and the actual performance information can be easily performed at each management position.

In the tenth configuration or the eleventh configuration, the management server further includes a document creator configured to create a document in which the actual performance information is associated with each management position in accordance with a predetermined format based on the construction management information (twelfth configuration).

As a result, it is possible to reduce a work load when creating the document for each management position based on the construction management information.

A pipeline construction management method according to an embodiment of the present invention controls a pipeline construction management system that includes an actual performance acquisition terminal and a management server, and manages pipeline construction. The pipeline construction management method includes a construction plan information generation step of causing the management server to generate construction plan information by associating information related to a construction plan of a pipeline that is a target of the pipeline construction with a management item; a construction plan information transmission step of causing the management server to transmit the construction plan information to the actual performance acquisition terminal; an actual performance information acquisition step of causing the actual performance acquisition terminal to acquire data related to a construction actual performance corresponding to the management item in the pipeline construction as actual performance information; an actual performance information reception step of causing the management server to receive the actual performance information from the actual performance acquisition terminal; and a construction management information generation step of causing the management server to generate construction management information by associating the actual performance information received from the actual performance acquisition terminal with the construction plan information (thirteenth configuration).

With the above-described configuration, the management server generates the construction plan information in which the information related to the construction plan is associated with the management item.

In addition, the actual performance acquisition terminal acquires data related to the construction actual performance corresponding to the management item as the actual performance information. On the other hand, the management server generates the construction management information by associating the actual performance information acquired by the actual performance acquisition terminal with the construction plan information.

As a result, the construction plan information and the actual performance information can be associated with each other via the management item. Therefore, the data of the construction plan and the data of the construction actual performance are efficiently data-processed, and the construction actual performance can be managed more efficiently.

In the thirteenth configuration, in the construction management information generation step, the management server generates the construction management information by associating the construction plan information and the actual performance information with a management position that is a management target in the pipeline (fourteenth configuration).

As a result, a large amount of data of the construction plan information and the actual performance information can be efficiently organized, and comparison between the construction plan information and the actual performance information can be easily performed at each management position.

In the thirteenth configuration or the fourteenth configuration, the pipeline construction management method further includes a document creation step of causing the management server to create a document in which the actual performance information is associated with each management position in accordance with a predetermined format based on the construction management information (fifteen configuration).

As a result, it is possible to reduce a work load when creating the document for each management position based on the construction management information.

A pipeline construction management program according to an embodiment of the present invention controls a pipeline construction management system that includes an actual performance acquisition terminal and a management server, and manages pipeline construction. The pipeline construction management program causes the management server to execute: construction plan information generation processing of generating construction plan information by associating information related to a construction plan of a pipeline that is a target of the pipeline construction with a management item; construction plan information transmission processing of transmitting the construction plan information to the actual performance acquisition terminal; actual performance information reception processing of receiving the actual performance information from the actual performance acquisition terminal that has acquired actual performance information including data related to a construction actual performance corresponding to the management item in the pipeline construction; and construction management information generation processing of generating construction management information by associating the actual performance information received from the actual performance acquisition terminal with the construction plan information (sixteenth configuration).

With the above-described configuration, the management server generates the construction plan information in which the information related to the construction plan is associated with the management item.

In addition, the management server generates the construction management information by associating the actual performance information acquired by the actual performance acquisition terminal with the construction plan information.

As a result, the construction plan information and the actual performance information can be associated with each other via the management item. Therefore, the data of the construction plan and the data of the construction actual performance are efficiently data-processed, and the construction actual performance can be managed more efficiently.

In the sixteenth configuration, the construction management information generation processing includes processing of causing the management server to generate the construction management information by associating the construction plan information and the actual performance information with a management position that is a management target in the pipeline (seventeenth configuration).

As a result, a large amount of data of the construction plan information and the actual performance information can be efficiently organized, and comparison between the construction plan information and the actual performance information can be easily performed at each management position.

In the sixteenth configuration or the seventeenth configuration, the pipeline construction management program causes the management server to further execute: submission document creation processing of creating a document in which the actual performance information is associated with each management position in accordance with a predetermined format based on the construction management information (eighteenth configuration).

As a result, it is possible to reduce a work load when creating the document for each management position based on the construction management information.

### Advantageous Effects of Invention

In the pipeline construction management system according to an embodiment of the present invention, the management server includes the construction plan information generator configured to generate the construction plan information by associating information related to the construction plan of the pipeline that is the target of the pipeline construction with the management item, and the construction management information generator configured to generate the construction management information by associating the actual performance information acquired by the actual performance acquisition terminal with the construction plan information.

As a result, the data of the construction plan and the data of the construction actual performance are efficiently data-processed, and the construction actual performance can be managed more efficiently.

### Brief Description of Drawings

FIG. 1 is a functional block diagram illustrating a schematic configuration of a water pipe construction management system according to Embodiment 1 of the present invention.
FIG. 2 is a functional block diagram illustrating a schematic configuration of a management server, a construction plan terminal, and an actual performance acquisition terminal included in the water pipe construction management system.
FIG. 3 is a diagram for describing an excavation trench width and a soil cover of a place where a water pipe is buried.
FIG. 4 is a diagram for describing a type of pavement or a roadbed of a road and a thickness thereof.
FIG. 5 is a diagram for describing a method of setting a start point and an end point of a pipeline of water pipes that is a target of water pipe construction.
FIG. 6 is a diagram for describing a method of setting a management position of a pipeline in water pipe construction.
FIG. 7 is a flowchart illustrating a flow of processing of a water pipe construction management method of controlling the water pipe construction management system that manages water pipe construction.
FIG. 8 is a functional block diagram illustrating a schematic configuration of a water pipe construction management system according to Embodiment 2 of the present invention.
FIG. 9 is a diagram illustrating a template of an as-built management table which is an example of construction plan information.
FIG. 10 is a diagram illustrating an as-built management table which is an example of a submission document.
FIG. 11 is a functional block diagram illustrating a schematic configuration of a water pipe construction management system according to Embodiment 3 of the present invention.
FIG. 12 is a diagram for describing a method of setting a management position of a pipeline in photograph management.
FIG. 13 is a diagram illustrating an example of an electronic blackboard.
FIG. 14 is a diagram illustrating an example of a work information management list.
FIG. 15 is a diagram illustrating an example of a monitor image of the actual performance acquisition terminal when capturing a photograph.
FIG. 16 is a diagram illustrating the monitor image to which an electronic blackboard is added.
FIG. 17 is a functional block diagram illustrating a schematic configuration of a water pipe construction management system according to Embodiment 4 of the present invention.
FIG. 18 is a diagram schematically illustrating section drawing data.
FIG. 19 is a diagram schematically illustrating construction plan information.
FIG. 20 is a diagram schematically illustrating modification processing of construction plan information.

### Description of Embodiments

Hereinafter, each embodiment will be described with reference to drawings. In each drawing, the same portions are denoted by the same reference numerals, and the description of the same portions will not be repeated. Dimensions of constituent members in each drawing do not faithfully represent dimensions of actual constituent members, dimensional ratios of each constituent member, and the like.

### [Embodiment 1]

### (Water Pipe Construction Management System)

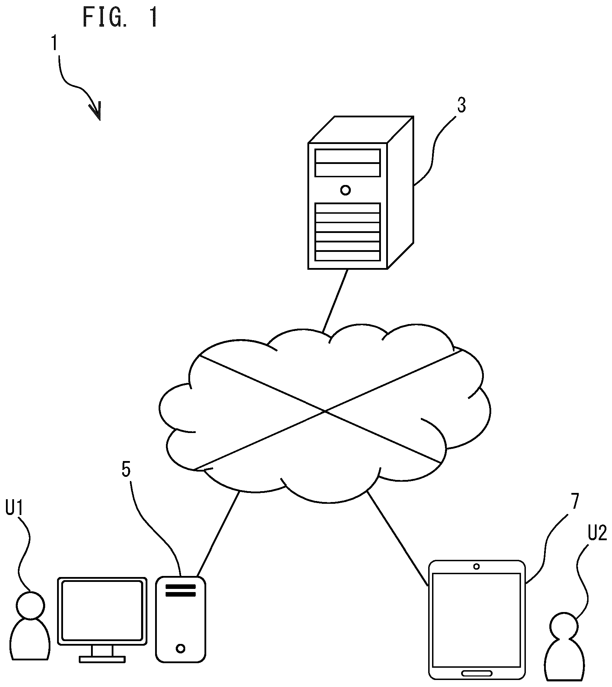

FIG. 1 is a functional block diagram illustrating a schematic configuration of a water pipe construction management system (pipeline construction management system) 1 according to Embodiment 1 of the present invention.

The water pipe construction management system 1 is a system that manages an actual performance of water pipe construction (pipeline construction). The water pipe construction means construction of burying a water pipe or the like underground. The water pipe construction includes not only work of newly burying a water pipe or the like in the underground but also work of updating a water pipe or the like buried in the underground. The water pipe and the like include not only the water pipe but also components necessary for forming a pipeline, such as a valve.

As illustrated in FIG. 1, the water pipe construction management system 1 includes a management server 3, a construction plan terminal 5, and an actual performance acquisition terminal 7. The management server 3 and the construction plan terminal 5 are connected to each other via a network such as the Internet to be communicable with each other. In addition, the management server 3 and the actual performance acquisition terminal 7 are connected to each other via a network such as the Internet to be communicable with each other.

The management server 3 is a server apparatus that has a database in which various types of data for managing the water pipe construction are stored and provides a function of processing the data.

The construction plan terminal 5 is a front-end terminal for performing work of creating information related to the construction plan of the pipeline of the water pipes that is a target of the water pipe construction. A user of the construction plan terminal 5 is a planning person in charge U1 who is in charge of creating the construction plan. The construction plan terminal 5 is used by the planning person in charge U1 who is the user to create a construction plan. The construction plan terminal 5 can be realized by, for example, a personal computer, a tablet terminal, or the like. The construction plan terminal 5 accesses the management server 3 by wired or wireless communication, and performs an operation of associating information related to the construction plan of the pipeline of the water pipes, which is the target of the water pipe construction, with a management item for managing an actual performance in the water pipe construction.

The actual performance acquisition terminal 7 acquires data related to the construction actual performance corresponding to the management item as the actual performance information. The user of the actual performance acquisition terminal 7 is a site person in charge U2 of the water pipe construction. The actual performance acquisition terminal 7 is used by the site person in charge U2 who is a user to input the actual performance information. The actual performance acquisition terminal 7 can be realized by, for example, a mobile terminal such as a notebook PC, a tablet terminal, or a smartphone. Since the actual performance acquisition terminal 7 is used in the site, it is preferable that the actual performance acquisition terminal 7 can perform wireless communication, but wired communication may be performed.

### (Management Server)

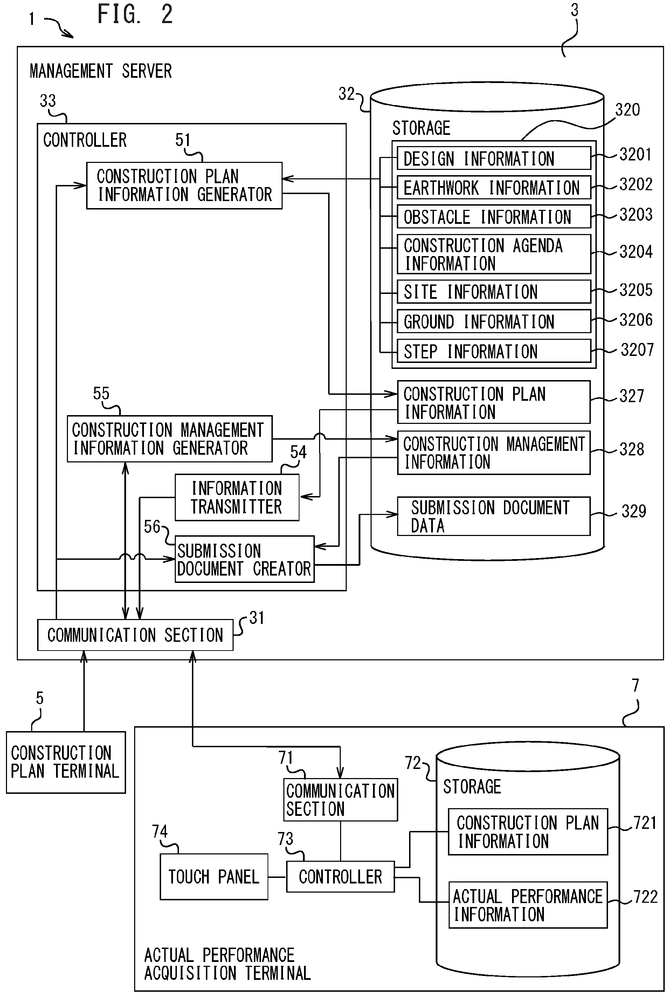

FIG. 2 is a functional block diagram illustrating a schematic configuration of the management server 3, the construction plan terminal 5, and the actual performance acquisition terminal 7 included in the water pipe construction management system 1.

As illustrated in FIG. 2, the management server 3 includes a communication section 31, a storage 32, and a controller 33.

The communication section 31 is a network interface for performing communication by being connected to a wired or wireless network.

The storage 32 stores a program executed in the controller 33, data used in the program, and the like. Details of the data stored in the storage 32 will be described below.

The controller 33 executes various functions in the management server 3 by executing a program. Details of the controller 33 will be described below.

### (Construction Plan Terminal)

As described above, the construction plan terminal 5 has the communication function with the management server 3. In addition, the construction plan terminal 5 can implement various functions by executing various types of processing, such as a local program. In addition, the construction plan terminal 5 can store the local program and various types of data used in the program.

The construction plan terminal 5 has an operation input section (not illustrated) that can be input-operated by the planning person in charge U1 who is the user. The construction plan terminal 5 executes various types of processing such as a program based on an input operation content. The construction plan terminal 5 may have a display, or may be configured to output display data to another display.

In addition, the construction plan terminal 5 transmits the input operation content to the management server 3. The management server 3 executes various applications in accordance with the operation content.

For example, CAD software or the like is installed as a local program in the construction plan terminal 5, and information related to the construction plan can be edited. In addition, the construction plan terminal 5 can synchronize the information related to the edited construction plan with the data stored in the storage 32 of the management server 3 by performing network communication with the management server 3.

### (Actual Performance Acquisition Terminal)

As illustrated in FIG. 2, the actual performance acquisition terminal 7 includes a communication section 71, a storage 72, a controller 73, and a touch panel 74.

The communication section 71 is a network interface for performing communication by being connected to a wireless network according to a mobile phone communication network, a wireless communication standard or the like, or a wired network.

The storage 72 stores various types of data including a program executed in the controller 73, data used in the program, or the like. Details of the data stored in the storage 72 will be described below.

The controller 73 executes various functions in the actual performance acquisition terminal 7 by executing the program.

The touch panel 74 receives a touch input from the user of the actual performance acquisition terminal 7 and performs various screen displays for the user. The actual performance acquisition terminal 7 executes various types of processing based on the operation content received by the touch panel 74. In addition, the actual performance acquisition terminal 7 transmits the operation content received by the touch panel 74 to the management server 3.

### (Details of Controller of Management Server)

As illustrated in FIG. 2, the controller 33 of the management server 3 includes a construction plan information generator 51, an information transmitter 54, a construction management information generator 55, and a submission document creator 56.

The construction plan information generator 51 generates construction plan information 327 by associating information 320 related to the construction plan of the pipeline of the water pipes, which is the target of the water pipe construction, with a management item. In addition, the construction plan information generator 51 associates the management position, which is a management target in the pipeline, with the management item.

The information 320 related to the construction plan includes, for example, design information 3201, earthwork information 3202, obstacle information 3203, construction agenda information 3204, site information 3205, ground information 3206, and step information 3207.

The design information 3201 is information related to the design of the pipeline. The design information 3201 includes information related to the water pipes, such as a diameter, a length, a type (a straight pipe, a deformed pipe, a cut pipe, and the like), the number, and the disposition of the water pipes used in the water pipe construction. The design information 3201 is, for example, information obtained from a pipeline drawing of the water pipes or the like. That is, the design information 3201 includes information related to the designed pipeline (hereinafter, referred to as a "design pipeline"). The design information 3201 is created, for example, based on the operation content in the construction plan terminal 5.

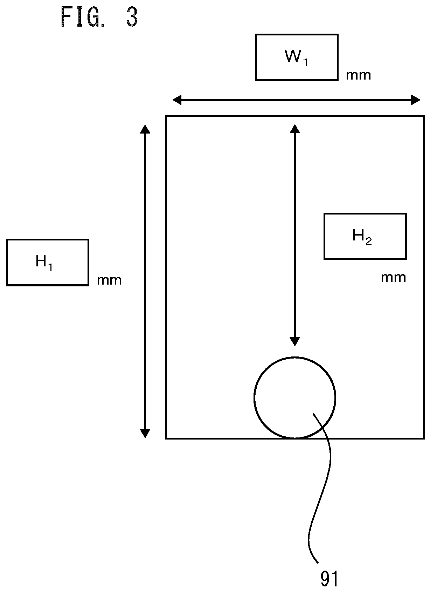

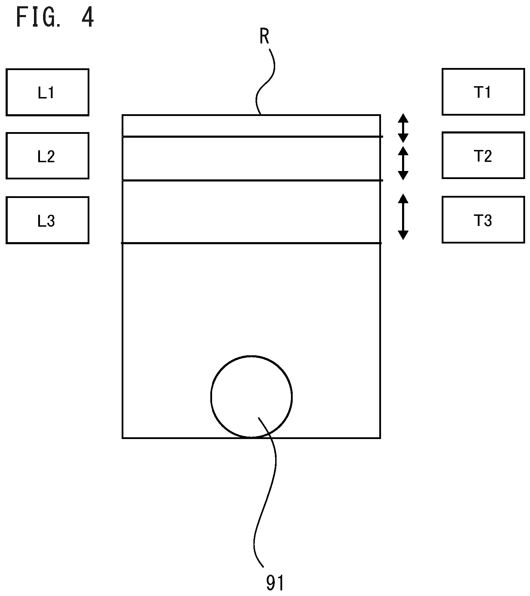

The earthwork information 3202 is information related to earthwork of water pipe construction. The description will be made more specifically with reference to FIGS. 3 and 4. FIG. 3 is a diagram describing an excavation trench width and a soil cover of a place where the water pipe 91 is buried. FIG. 4 is a diagram describing a type of pavement or a roadbed of a road and a thickness thereof. As illustrated in FIG. 3, the earthwork information 3202 includes an excavation trench width W₁ of a place where the water pipe 91 is buried, an excavation depth H₁, and a soil cover H₂ with respect to the water pipe 91. In addition, as illustrated in FIG. 4, the earthwork information 3202 includes types L1, L2, and L3 of the pavement or the roadbed before and after burial and thicknesses T1, T2, and T3 of the types. The type may indicate a structure of an upper layer of a subgrade in a structure of a road R. For example, the type L1 is a surface layer, the type L2 is an upper layer roadbed, and the type L3 is a lower layer roadbed. In addition, the earthwork information 3202 includes a standard value of the information related to design dimensions of the earthwork. The standard value is a value indicating an allowable range of an error with respect to the design dimensions. In addition, the earthwork information 3202 may further include information related to the characteristics of the road structure and an earth retaining location.

The obstacle information 3203 includes information related to an underground obstacle (an underground structure such as a crossing pipe, other underground buried objects, and the like) at the place where the water pipe is buried. The obstacle information 3203 may further include information related to at least one of a road structure, soil quality, and groundwater.

The construction agenda information 3204 includes information related to the agenda of the water pipe construction. The construction agenda information 3204 may include, for example, identification information for specifying the agenda of the water pipe construction, a place of construction, a construction name, a work type, a schematic drawing, a directive number, or the like of the water pipe construction.

The site information 3205 includes information related to the site condition. The information related to the site condition includes at least one piece of information of information related to a work available time, a work available number of workers, a type and a number of work machines to be used, whether parallel work is possible, whether parallel use of work machines is possible, transportation time of earth and sand, a water pipe, or the like, and whether trial excavation is performed, and the like.

The ground information 3206 includes information related to the ground of a place where the water pipe is buried. Specifically, the ground information 3206 includes ground peripheral related information and road condition related information.

The ground peripheral related information includes information related to an environment in a vicinity of the place where water pipe construction is performed. For example, the information related to the environment in the vicinity of the place where the water pipe construction is performed includes information related to whether there is a facility that is used by surrounding residents at a place facing the construction place or a place in the vicinity of the construction place. The facility includes a house, a store, a parking lot, and the like. The information related to the environment in the vicinity of the place where the water pipe construction is performed includes information related to whether the construction place is in a city or in a suburb.

The road condition related information includes traffic information at the place where water pipe construction is performed, and information on a width of a road and the number of lanes of the road in a case where the place where the water pipe construction is performed is a road.

The step information 3207 is information related to a construction schedule of a pipeline of a target.

The management item is an item for which an actual performance is managed in the water pipe construction. The management item includes, for example, an item described in the submission document.

The construction plan information generator 51 associates, for example, the information 320 related to the construction plan with the management item and the management position, as will be described below.

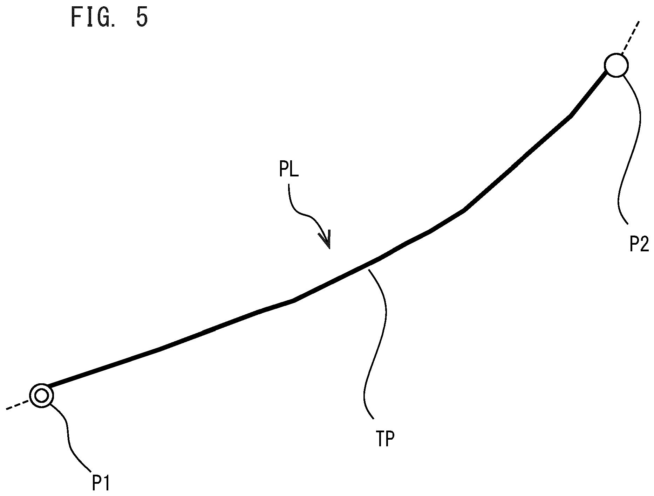

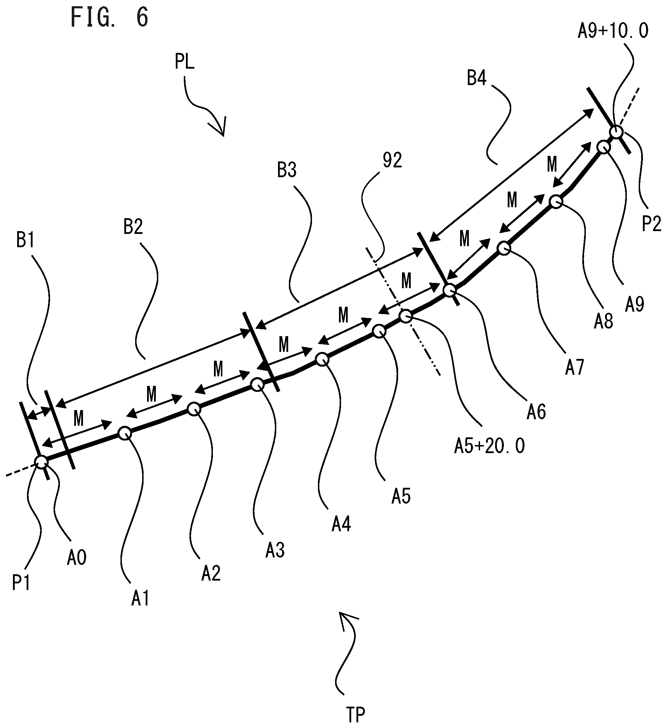

FIG. 5 is a diagram for describing a method of setting a start point P1 and an end point P2 of a design pipeline TP of water pipes PL that is a target of the water pipe construction. FIG. 6 is a diagram for describing a method of setting a management position of the pipeline in the water pipe construction.

As illustrated in FIG. 5, the construction plan information generator 51 sets the start point P1 and the end point P2 of the design pipeline TP of the water pipes PL that is the target of the water pipe construction, in accordance with an operation of a user on the construction plan terminal 5.

Then, as illustrated in FIG. 6, the construction plan information generator 51 sets management positions A0, ..., A9+10.0 for the design pipeline TP.

The management position includes a basic measurement point set at a predetermined interval M from the start point P1 (=A0) and an additional measurement point set at a significant point.

For example, "A" + a number is assigned as an identification number to the management position which is the basic measurement point. The management positions A0, A1, ..., A9, and the like correspond to the basic measurement points. The predetermined interval M is, for example, 50 m. Therefore, the basic measurement point does not necessarily coincide with a joint between the water pipe and the water pipe.

A bypass pipe portion such as an underpass portion is assigned to the additional measurement point set at the significant point. The underpass portion is a portion where the pipe bypasses below the underground obstacle such as a crossing pipe 92 at a position where the underground obstacle exists underground. The bypass pipe portion also includes an overpass portion that bypasses above the underground obstacle and is piped, a twisted portion that is piped by bending a pipeline in a horizontal direction to be bypassed, and the like. The additional measurement points set at the significant points include a location where an earthwork cross section changes. In addition, even in a case where the end point is a position other than the basic measurement point, the measurement of the measurement value at the end point is required.

The additional measurement point is identified by a planar distance from the basic measurement point. For this reason, for example, "A", "a number of a basic measurement point that is a reference", and "the planar distance from the basic measurement point" are assigned as identification numbers to the management position which is the additional measurement point. In FIG. 6, the management position A5+20.0 is an additional measurement point of the underpass portion. In FIG. 6, the management position A9+10.0 is an additional measurement point at the end point. The additional measurement point can be set manually or automatically separately from the basic measurement point.

In addition, each management position is associated with earthwork sections B1 to B4. Here, the earthwork section means a section having the same earthwork information. That is, the same earthwork information is applied to the same earthwork section.

As described above, the construction plan information generator 51 generates the construction plan information 327 by associating the information 320 related to the construction plan of the pipeline of the water pipes, which is the target of the water pipe construction, with the management item and the management position. The management item and the management position may be associated with identification information for specifying the agenda of the water pipe construction or a construction name of the water pipe construction. That is, the construction plan information 327 may include the identification information for specifying the agenda of the water pipe construction or the construction name of the water pipe construction. The construction plan information generator 51 stores the created construction plan information 327 in the storage 32.

The information transmitter 54 transmits the construction plan information 327 generated by the construction plan information generator 51 to the actual performance acquisition terminal 7. In addition, the information transmitter 54 may transmit construction management information 328 generated by a construction management information generator 55, which will be described later, to the actual performance acquisition terminal 7.

The construction management information generator 55 generates the construction management information 328 by associating actual performance information 722 acquired by the actual performance acquisition terminal 7 with the construction plan information 327. The construction management information generator 55 stores the generated construction management information 328 in the storage 32.

The submission document creator 56 creates a document in which the actual performance information 722 is associated for each management position based on the construction management information 328 generated by the construction management information generator 55, in accordance with a predetermined format. The submission document creator 56 stores the created submission document data 329 in the storage 32.

As described above, the water pipe construction management system 1 is a system that manages the water pipe construction. The water pipe construction management system 1 includes the management server 3 and the actual performance acquisition terminal 7 that is communicable with the management server 3 and acquires data related to the construction actual performance corresponding to the management item for managing the actual performance in the water pipe construction as the actual performance information 722.

The management server 3 includes the construction plan information generator 51 that generates the construction plan information 327 by associating information 320 related to the construction plan of the design pipeline TP of the water pipes PL, which is the target of the water pipe construction, with the management item, and the construction management information generator 55 that generates the construction management information 328 by associating the actual performance information 722 acquired by the actual performance acquisition terminal 7 with the construction plan information 327.

With the above-described configuration, the management server 3 generates the construction plan information 327 in which the information 320 related to the construction plan is associated with the management item.

The actual performance acquisition terminal 7 acquires data related to the construction actual performance corresponding to the management item as the actual performance information 722. The actual performance information 722 may include identification information for specifying the agenda of the water pipe construction or the construction name of the water pipe construction. On the other hand, the management server 3 generates the construction management information 328 by associating the actual performance information 722 with the construction plan information 327. The management server 3 may associate the actual performance information 722 with the construction plan information 327 via the identification information for specifying the agenda of the water pipe construction or the construction name of the water pipe construction. In addition, the construction management information 328 may include the identification information for specifying the agenda of the water pipe construction or the construction name of the water pipe construction.

As a result, the construction plan information 327 and the actual performance information 722 can be associated with each other via the management item. Therefore, the data of the construction plan and the data of the construction actual performance are efficiently data-processed, and the construction actual performance can be managed more efficiently.

In addition, as a result, the computation processing can be efficiently performed by using the management server 3 and the actual performance acquisition terminal 7.

In addition, the construction management information generator 55 of the management server 3 generates the construction management information 328 by associating the construction plan information 327 and the actual performance information 722 acquired by the actual performance acquisition terminal 7 with the management position that is the management target in the pipeline.

As a result, a large amount of data of the construction plan information 327 and the actual performance information 722 can be efficiently organized, and the comparison between the construction plan information 327 and the actual performance information 722 can be easily performed at each pipeline position.

In addition, the management server 3 further includes the submission document creator 56 that creates the document in which the actual performance information 722 is associated with each management position in accordance with the predetermined format based on the construction management information 328.

As a result, it is possible to reduce the work load when creating the document for each management position based on the construction management information 328.

### (Flow of Processing of Water Pipe Construction Management Method)

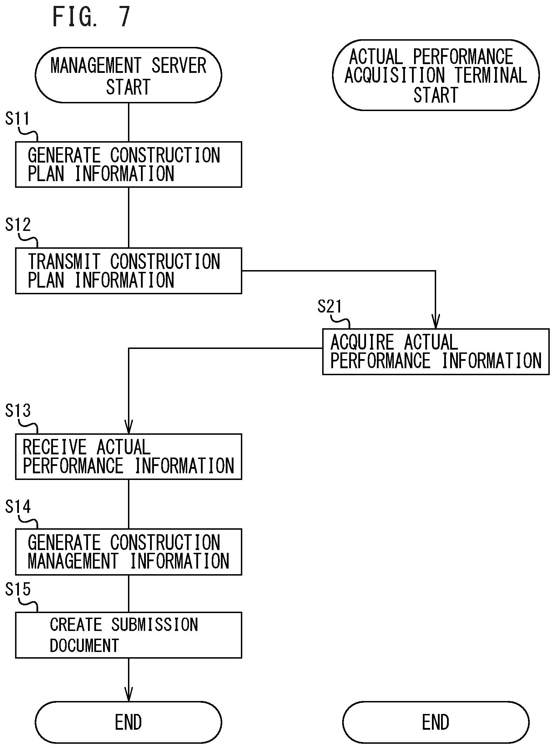

FIG. 7 is a flowchart illustrating a flow of processing of a water pipe construction management method of controlling the water pipe construction management system 1 (pipeline construction management method) that manages the water pipe construction.

As illustrated in FIG. 7, first, the management server 3 generates the construction plan information 327 by associating the information 320 related to the construction plan of the pipeline of the water pipes, which is the target of the water pipe construction, with the management item (construction plan information generation step) (step S11). The management server 3 may execute step S11 in accordance with the request from the construction plan terminal 5.

Next, the management server 3 transmits the construction plan information 327 to the actual performance acquisition terminal 7 (construction plan information transmission step) (step S12).

In response to this, the actual performance acquisition terminal 7 acquires data related to the construction actual performance corresponding to the management item in the water pipe construction as the actual performance information 722 (actual performance information acquisition step) (step S21).

Next, the management server 3 receives the actual performance information 722 from the actual performance acquisition terminal 7 (actual performance information reception step) (step S13). The actual performance information 722 is transmitted from the actual performance acquisition terminal 7 to the management server 3 in association with the corresponding management item.

Next, the management server 3 generates the construction management information 328 by associating the actual performance information 722 received from the actual performance acquisition terminal 7 with the construction plan information 327 (construction management information generation step) (step S14).

Further, the management server 3 creates the document in accordance with the predetermined format for each management position based on the construction management information 328 (document creation step) (step S15).

With the water pipe construction management method, the data of the construction plan and the data of the construction actual performance are efficiently data-processed, and the construction actual performance can be managed more efficiently. In addition, a large amount of data of the construction plan information 327 and the actual performance information 722 can be efficiently organized, and the comparison between the construction plan information 327 and the actual performance information 722 can be easily performed at each management position. In addition, it is possible to reduce the work load when creating the document for each management position based on the construction management information 328.

### (Water Pipe Construction Management Program)

The water pipe construction management program (pipeline construction management program) may be a program that causes the management server 3 constituting a part of the water pipe construction management system 1 to execute steps S11 to S15 illustrated in FIG. 7. By executing this program by the management server 3, the water pipe construction management system 1 and the water pipe construction management method in the present embodiment can be realized.

The water pipe construction business support system control program according to the present embodiment is a program for controlling the water pipe construction management system 1 that has the actual performance acquisition terminal 7 and the management server 3, and manages the water pipe construction.

The water pipe construction management program causes the management server 3 to execute construction plan information generation processing of generating the construction plan information 327 by associating the information 320 related to the construction plan of the pipeline of the water pipes, which is the target of the water pipe construction, with the management item, construction plan information transmission processing of transmitting the construction plan information 327 to the actual performance acquisition terminal 7, actual performance information reception processing of receiving the actual performance information 722 from the actual performance acquisition terminal 7 that acquires the actual performance information 722 including data related to the construction actual performance corresponding to the management item in the water pipe construction, and construction management information generation processing of generating the construction management information 328 by associating the actual performance information 722 received from the actual performance acquisition terminal 7 with the construction plan information 327.

In addition, in the water pipe construction management program, the construction management information generation processing includes processing of causing the management server 3 to generate the construction management information 328 by associating the construction plan information 327 and the actual performance information 722 with the management position that is the management target in the pipeline.

In addition, the water pipe construction management program causes the management server 3 to further execute submission document creation processing of creating a document in accordance with a predetermined format for each management position based on the construction management information 328.

With the water pipe construction management program, the data of the construction plan and the data of the construction actual performance are efficiently data-processed, and the construction actual performance can be managed more efficiently. In addition, a large amount of data of the construction plan information 327 and the actual performance information 722 can be efficiently organized, and the comparison between the construction plan information 327 and the actual performance information 722 can be easily performed at each management position. In addition, it is possible to reduce the work load when creating the document for each management position based on the construction management information 328.

### [Embodiment 2]

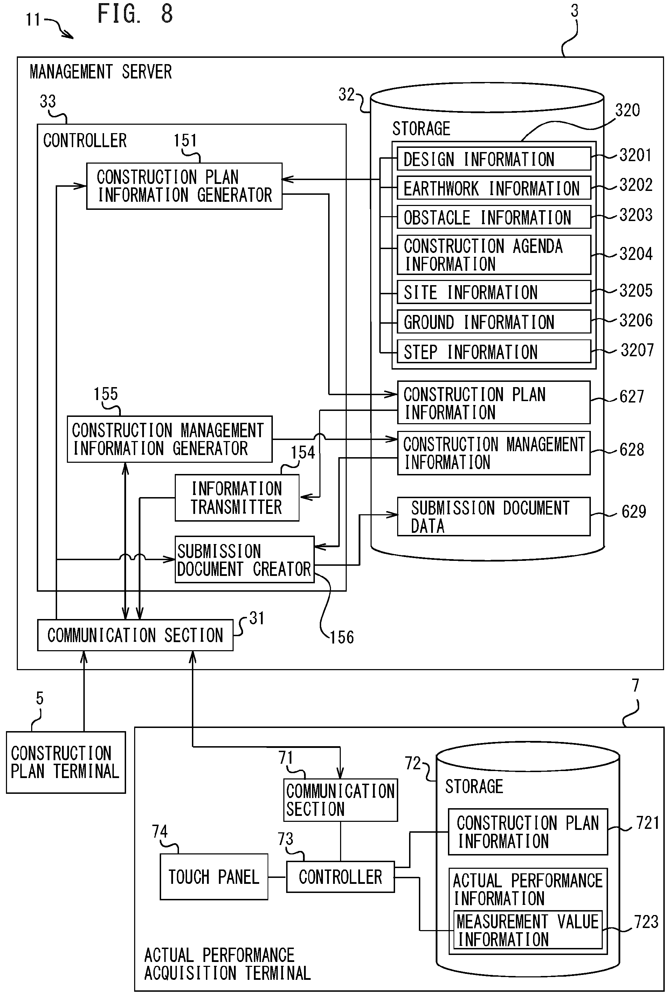

FIG. 8 is a functional block diagram illustrating a schematic configuration of a water pipe construction management system 11 according to Embodiment 2 of the present invention.

The water pipe construction management system 11 according to Embodiment 2 is a system that performs the as-built management. The water pipe construction management system 11 is different from the water pipe construction management system 1 according to Embodiment 1 in that the management items required in the as-built management are managed. In addition, in the water pipe construction management system 11, the actual performance information, which is data related to the construction actual performance corresponding to the management item, includes, for example, a measurement value with respect to a design value of the pipeline. The actual performance acquisition terminal 7 acquires measurement value information 723 as the actual performance information.

In the description of Embodiment 2, the detailed description of the parts common to the water pipe construction management system 1 according to Embodiment 1 will not be repeated.

### (Actual Performance Acquisition Terminal)

As illustrated in FIG. 8, the storage 72 of the actual performance acquisition terminal 7 stores the measurement value information 723 constituting a part of the actual performance information. The measurement value information 723 is, for example, information related to the measurement value measured in the site, and is input to the actual performance acquisition terminal 7 by the touch panel 74. The actual performance acquisition terminal 7 transmits the measurement value information 723 to the management server 3.

### (Management Server)

As illustrated in FIG. 8, the storage 32 of the management server 3 stores the construction plan information 627, the construction management information 628, and the submission document data 629.

In addition, the controller 33 of the management server 3 includes a construction plan information generator 151, an information transmitter 154, a construction management information generator 155, and a submission document creator 156.

The construction plan information generator 151 generates the construction plan information 627 by associating the information 320 related to the construction plan of the pipeline of the water pipes, which is the target of the water pipe construction, with the management item and the management position required in the as-built management.

In a case of the as-built management, the management item includes various dimensions in the water pipe construction. In the as-built management, the management item may be set for each work type. Examples of the work type in the water pipe construction include pipe earthwork, pipe laying work, roadbed work, pavement work, and the like. The work type is manually or automatically set for each management position. As illustrated in FIGS. 3 and 4, in the pipe earthwork, the management item includes, for example, an excavation trench width and an excavation depth at a place where the water pipe is buried. In addition, in backfilling work such as the roadbed work and the pavement work, the management item includes the type of pavement or roadbed and the thickness thereof. The management position of the as-built management is as described in Embodiment 1. That is, the management position of the as-built management includes a basic measurement point set at a predetermined interval and an additional measurement point set at a bypass pipe portion such as the underpass portion, a location where an earthwork cross section changes, and a significant point such as the end point P2.

Identification information for specifying the agenda of the water pipe construction or the construction name of the water pipe construction is associated with the construction plan information 627 generated by the construction plan information generator 151. In addition, the construction plan information 627 includes a design value related to the earthwork of the water pipe construction.

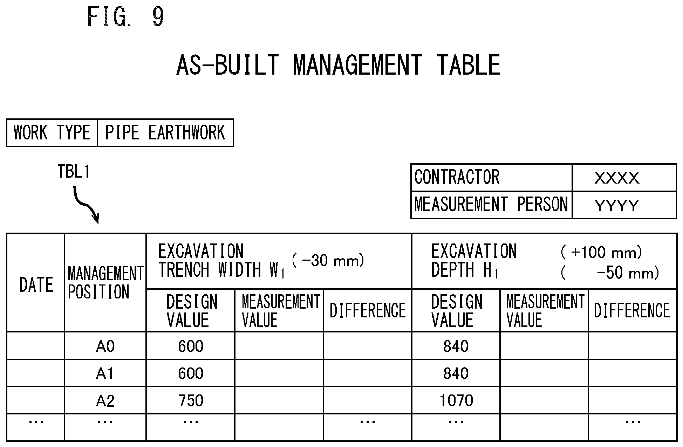

Hereinafter, an example of the construction plan information 627 will be described with reference to FIG. 9. FIG. 9 is a diagram illustrating a template of an as-built management table which is an example of the construction plan information 627. The construction plan information 627 includes the template of the as-built management table as illustrated in FIG. 9.

The as-built management table illustrated in FIG. 9 is formatted for the work type of pipe earthwork. A list TBL1 included in the as-built management table includes an excavation trench width W₁ and an excavation depth H₁ as the management items. In addition, the design values of the excavation trench width W₁ and the excavation depth H₁ associated with the management position Nos. A0, A1, A2, ... are described in the list TBL1. In addition, at the beginning of the list TBL1, a lower limit standard value - 30 mm of the excavation trench width W₁, as well as an upper limit standard value + 100 mm and a lower limit standard value - 50 mm of the excavation depth H₁ are described. The date, the measurement value, and the difference corresponding to the management position Nos. A0, A1, A2, ... are blank in a state where the measurement value is not measured.

The information transmitter 154 transmits the construction plan information 627 including the as-built management table to the actual performance acquisition terminal 7. In addition, the information transmitter 154 may synchronize the construction management information 628 generated by the construction management information generator 155, which will be described later, with the actual performance acquisition terminal 7.

The construction management information generator 155 generates the construction management information 628 by associating the measurement value included in the measurement value information 723 acquired by the actual performance acquisition terminal 7 with the construction plan information 627.

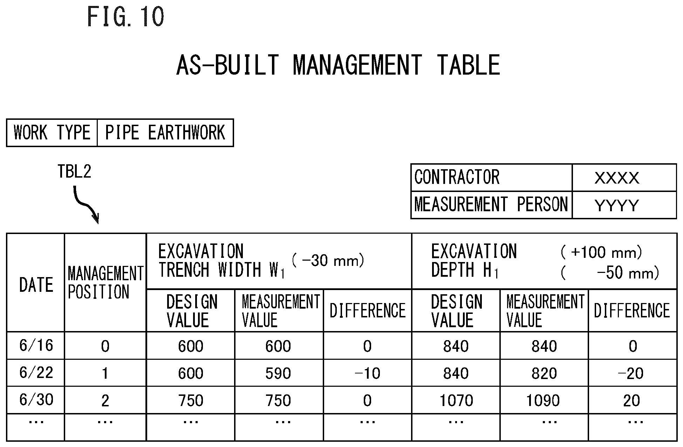

Hereinafter, an example of the construction management information 628 will be described with reference to FIG. 10. FIG. 10 is a diagram illustrating the as-built management table which is an example of the submission document. The construction management information 628 includes the as-built management table having a list TBL2 in which at least some of the actual performance values are described as illustrated in FIG. 10.

The construction management information generator 155 calculates a difference between the design value included in the construction plan information 627 and the measurement value acquired by the actual performance acquisition terminal 7. The construction management information generator 155 generates the as-built management table, which is an example of the construction management information 628, by associating the design value, the measurement value, and the difference with the management position.

The submission document creator 156 creates the as-built management table in which the design value and the measurement value are associated with each other for each management position based on the construction management information 628 generated by the construction management information generator 155, in accordance with a predetermined format.

As described above, in the water pipe construction management system 11, the construction plan information 627 includes the design value related to the earthwork of the water pipe construction. In addition, the data related to the construction actual performance includes the measurement value corresponding to the design value. In addition, the construction management information generator 155 calculates the difference between the design value and the measurement value included in the actual performance information acquired by the actual performance acquisition terminal 7, and generates the construction management information 628 by associating the design value, the measurement value, and the difference with the management position.

As a result, the design value, the measurement value, and the difference between the design value and the measurement value, which are related to the earthwork in the water pipe construction, can be managed as the construction management information 628 in association with the management position.

Therefore, it is possible to efficiently perform so-called as-built management of managing the design value, the measurement value, and the difference therebetween.

### [Embodiment 3]

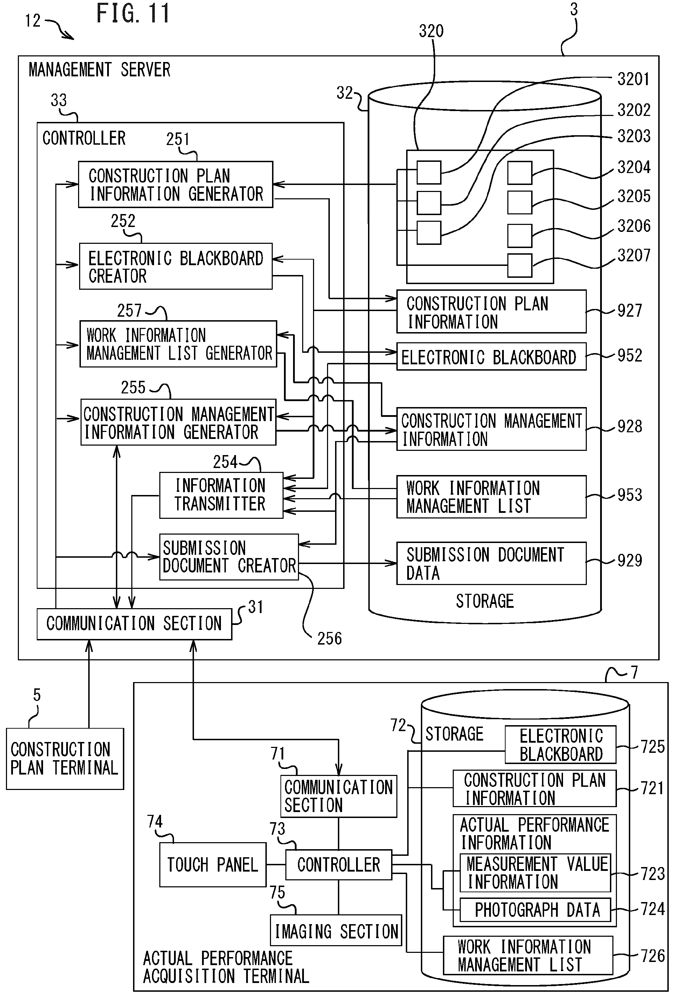

FIG. 11 is a functional block diagram illustrating a schematic configuration of a water pipe construction management system 12 according to Embodiment 3 of the present invention.

The water pipe construction management system 12 according to Embodiment 3 is a system that performs photograph management. The water pipe construction management system 12 is different from the water pipe construction management system 11 according to Embodiment 2 in that the water pipe construction management system 12 manages a photograph as a management item. In addition, in the photograph management, the management item is, for example, the photograph that is required to be captured at a place where the water pipe is buried or near the site.

In addition, in the water pipe construction management system 12, the actual performance information, which is data related to the construction actual performance corresponding to the management item, includes the photograph data captured at the site. The actual performance acquisition terminal 7 acquires photograph data 724 as the actual performance information.

In the description of Embodiment 3, the detailed description of the parts common to the water pipe construction management system 11 according to Embodiment 2 will not be repeated.

### (Actual Performance Acquisition Terminal)

As illustrated in FIG. 11, the storage 72 of the actual performance acquisition terminal 7 is different from the storage 72 of the actual performance acquisition terminal 7 according to Embodiment 2 in that photograph data 724 constituting a part of the actual performance information, an electronic blackboard 725, and a work information management list 726 are further stored.

The actual performance acquisition terminal 7 includes an imaging section 75 for capturing the photograph. The actual performance acquisition terminal 7 executes imaging in the imaging section 75, for example, in accordance with the operation of the user received by the touch panel 74. The controller 73 of the actual performance acquisition terminal 7 generates the photograph data 724 in which the electronic blackboard 725 is added. The controller 73 of the actual performance acquisition terminal 7 stores the generated photograph data 724 in the storage 72. A method of adding the electronic blackboard 725 to the photograph data 724 will be described in detail later. The actual performance acquisition terminal 7 transmits the generated photograph data 724 to the management server 3.

### (Management Server)

As illustrated in FIG. 11, the controller 33 of the management server 3 includes a construction plan information generator 251, an electronic blackboard creator 252, an information transmitter 254, a construction management information generator 255, a submission document creator 256, and a work information management list generator 257.

The construction plan information generator 251 generates construction plan information 927 by associating the information 320 related to the construction plan of the pipeline of the water pipes, which is the target of the water pipe construction, with the management item and the management position required in the photograph management.

In the photograph management, the water utility company determines an imaging item, an imaging location and imaging content of the imaging item, and the like, as a management item. In addition, a predetermined attachment material is required depending on the imaging item. For example, the imaging location, the imaging content, and the imaging item are determined as follows.

At all measurement points and change points, photographs of the site before the start and after the completion, and as-built photographs are required. At a buried position of a deformed pipe or the like other than the measurement point, an as-built photograph is required. Status photographs and quality control photographs are required at intervals of 150 m. That is, the imaging item may include a work content at the management position associated with the imaging item. There may be a plurality of work contents for one management position. At disposition positions of valves and plugs, a photograph of a gate valve, or the like is required. At a disposition position of temporary work, a photograph of an earth retaining location or the like is required. At a road restoration position or the like, a photograph of a water supply pipe switching work is required. That is, the imaging item may include equipment at the management position associated with the imaging item. In addition, a photograph of a temporary facility is required at a disposition position of the temporary facility, such as an office or a parking lot at the site. In addition, a photograph of an inspection of a pipe material such as the water pipe is required. In addition, in order to check safety management, photographs of a site patrol status and the like are required.

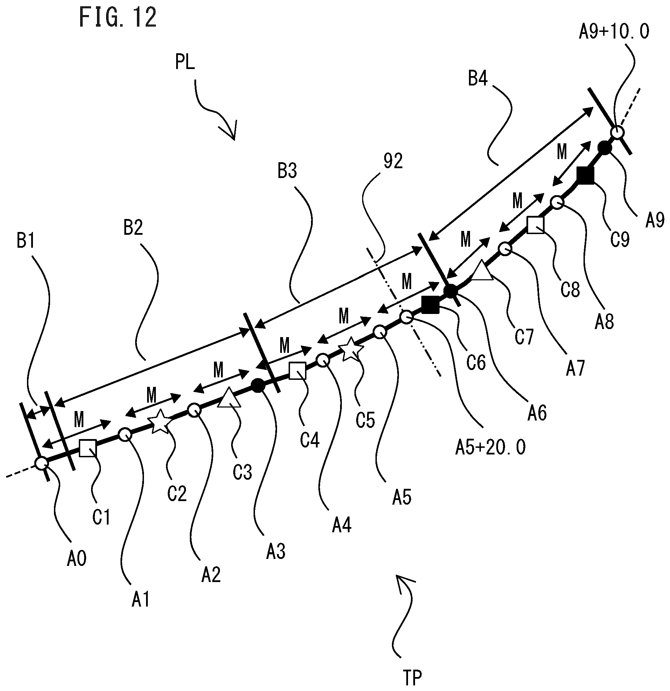

FIG. 12 is a diagram for describing a method of setting the management position of the pipeline in the photograph management. As illustrated in FIG. 12, the construction plan information generator 251 sets management positions A0, ..., A9+10.0, and C1 to C9 as the imaging locations for the design pipeline TP of which the start point and the end point are set.

The management positions A0, ..., and A9+10.0 indicated by white circle marks and black circle marks include the above-described basic points and additional measurement points. The black circle marks A3, A6, and A9 represent measurement points at every 150 m from the start point. In addition, the white circle marks A0, A1, A2, A4, A5, A5 + 20.0, A7, A8, and A9 + 10.0 represent measurement points other than the measurement points at every 150 m. That is, in the black circle marks A3, A6, and A9, the capturing of the status photograph, the as-built photograph, and the quality control photograph is required before the start and after the completion. In addition, in the white circle marks A0, A1, A2, ..., the capturing of the as-built photographs is required before the start and after the completion.

Triangular marks C3 and C7 represent the disposition positions of the deformed pipes. Therefore, in the triangular marks C3 and C7, the capturing of the as-built photograph is required.

White square marks C1, C4, and C8 represent the disposition positions of the gate valves. Therefore, in the white square marks C1, C4, and C8, the capturing of the photograph of the valves and plugs is required.

Star marks C2 and C5 represent the earth retaining locations. Therefore, in the star marks C2 and C5, the capturing of the photograph of the temporary work is required.

Black square marks C6 and C9 represent positions where the water supply pipe switching work is performed. Therefore, in the black square marks C6 and C9, the capturing of the photograph of the water supply pipe switching work is required.

As described above, the construction plan information generator 251 generates the construction plan information 927 by associating the information 320 related to the construction plan of the pipeline of the water pipes, which is the target of the water pipe construction, with the imaging item and the management position. In addition, the imaging item includes the work content or equipment at the management position.

The electronic blackboard creator 252 creates an electronic blackboard 952 to be added to the photograph data 724 based on the construction plan information 927. The need for addition of the electronic blackboard 952 is also set for each photograph required at each management position. The electronic blackboard creator 252 creates the electronic blackboard 952 in accordance with the need of addition of the electronic blackboard 952.

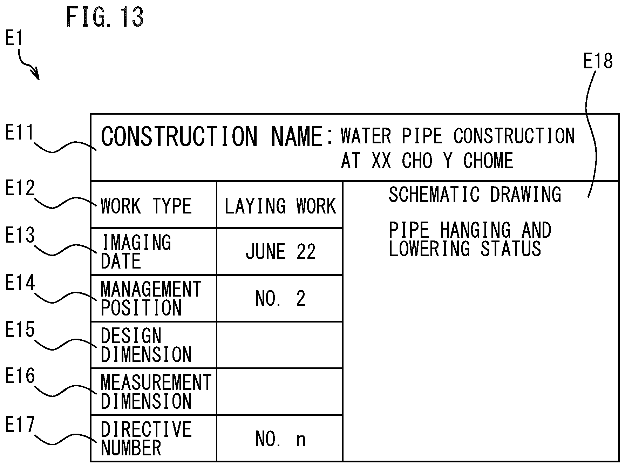

FIG. 13 is a diagram illustrating an example of the electronic blackboard. As illustrated in FIG. 13, an electronic blackboard E1 includes a construction name E11, a work type E12, an imaging date E13, a management position E14, a design dimension E15, a measurement dimension E16, a directive number E17, and a schematic drawing E18.

The electronic blackboard creator 252 sets the imaging date E13 based on step information included in the construction plan information 927. In addition, in a case where it is necessary to set the dimensions, the electronic blackboard creator 252 sets the design dimension E15 based on the design information included in the construction plan information 927. The measurement dimension E16 can be set after the measurement value information 723 including the measurement value is acquired by the actual performance acquisition terminal 7. In addition, the electronic blackboard creator 252 sets the construction name E11, the work type E12, and the directive number E17 based on the information 320 related to the construction plan included in the construction plan information 927.

The electronic blackboard creator 252 stores the electronic blackboard 952 created as described above in the storage 32.

The information transmitter 254 transmits the construction plan information 927 generated by the construction plan information generator 251 and the electronic blackboard image of the electronic blackboard 952 created by the electronic blackboard creator 252 to the actual performance acquisition terminal 7. In addition, the information transmitter 254 may synchronize construction management information 928 created by the construction management information generator 255, which will be described later, with the actual performance acquisition terminal 7. In addition, the information transmitter 254 synchronizes a work information management list 953 created by the work information management list generator 257, which will be described later, with the work information management list 726 stored in the storage 72 of the actual performance acquisition terminal 7.

The construction management information generator 255 generates the construction management information 928 by associating the photograph data 724 acquired by the actual performance acquisition terminal 7 with the construction plan information 927. More specifically, the construction management information generator 255 acquires the actual performance information including the photograph data 724 from the actual performance acquisition terminal 7, and generates the construction management information 928 by associating the photograph data 724, to which the electronic blackboard 725 is added, with the management position.

As a result, the management server can easily create the electronic blackboard image added to the photograph data 724. Therefore, it is possible to easily create the image data in which the electronic blackboard image is added to the photograph data 724. Therefore, the image data corresponding to the electronic blackboard 952 can be efficiently managed.

The submission document creator 256 creates a construction photograph register in which photographs as management items are associated for each management position based on the construction management information 928 generated by the construction management information generator 255, in accordance with a predetermined format. The submission document creator 256 stores the created construction photograph register in the storage 32 as submission document data 929.

The work information management list generator 257 creates a work information management list 953, which is data of a list of the actual performance information 722 acquired in a predetermined construction period, based on the construction management information 928. The predetermined construction period includes durations ranging from days to a large-scale construction period spanning months or years. In addition, the work information management list generator 257 creates the work information management list 953 for each management position. The work information management list generator 257 determines whether the photograph, which is the actual performance information, has already been captured at the management position, based on the construction management information 928. The work information management list generator 257 sets a completion flag indicating that the photograph has been captured, in a case where the photograph, which is the actual performance information, has already been captured at the management position.

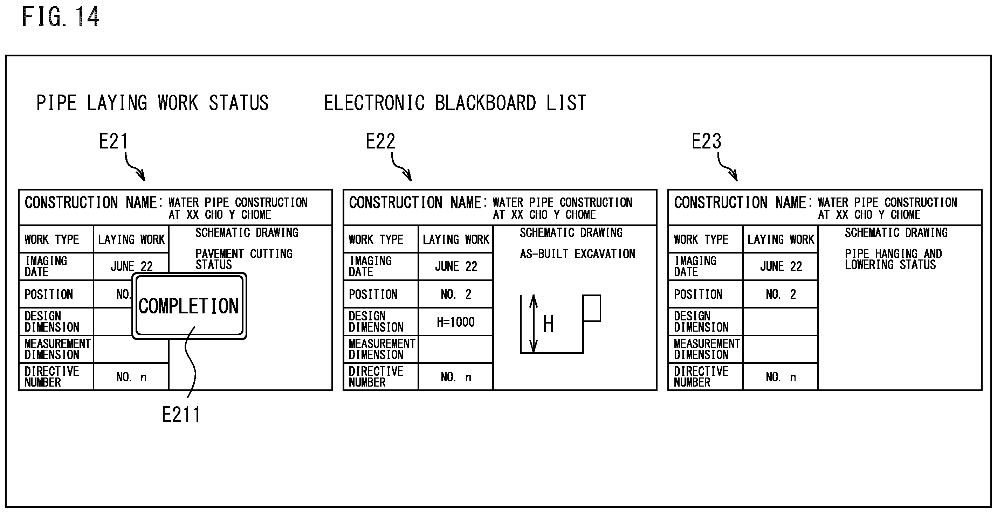

FIG. 14 is a diagram illustrating an example of the work information management list 953. In the example illustrated in FIG. 14, three electronic blackboards E21, E22, and E23 are created at the management position of No. 2. Since the photograph has been acquired for the electronic blackboard E21, the work information management list generator 257 sets a completion flag E211 for the electronic blackboard E21.

As a result, the actual performance information acquired in the predetermined construction period can be checked in a list. As a result, it is possible to present the acquisition of the actual performance information to be acquired to a person in charge for work in the site.

### (Addition of Electronic Blackboard to Photograph Data)

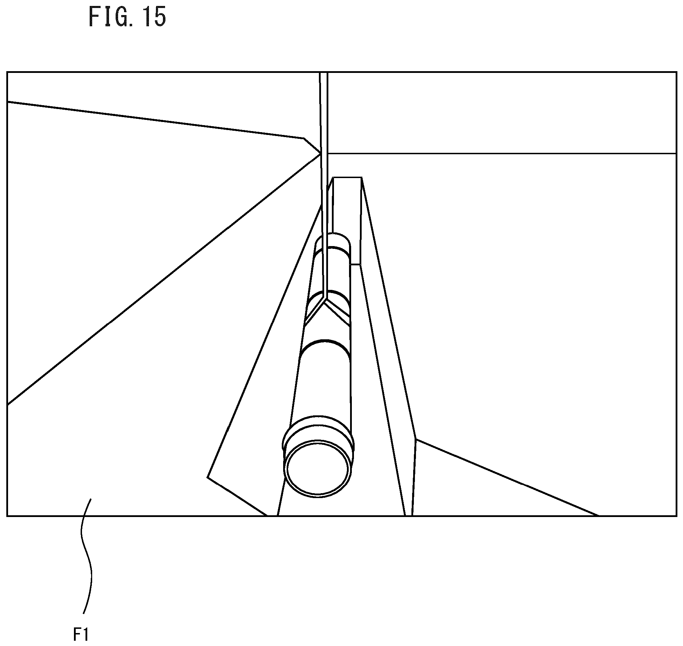

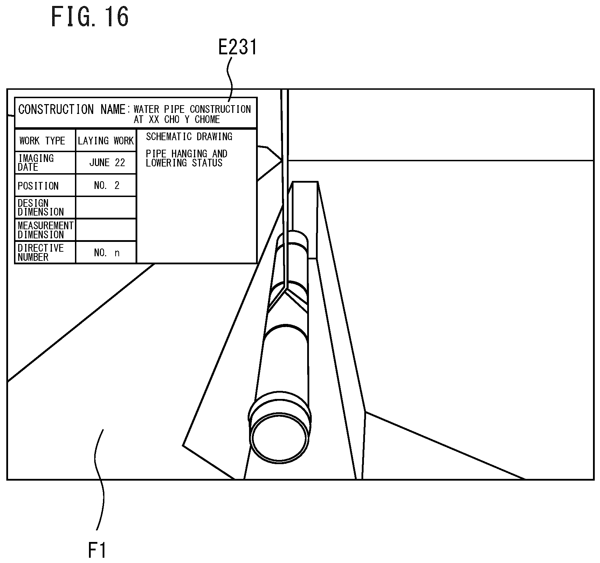

A method of adding the electronic blackboard to the photograph data will be described with reference to FIGS. 14 to 16. FIG. 15 is a diagram illustrating an example of a monitor image of the actual performance acquisition terminal 7 when capturing a photograph. FIG. 16 is a diagram illustrating the monitor image to which an electronic blackboard E3 is added.

The actual performance acquisition terminal 7 stores the work information management list 726 received from the management server 3 in the storage 72.

As illustrated in FIG. 14, the actual performance acquisition terminal 7 displays the content of the work information management list 726 on the touch panel 74. The actual performance acquisition terminal 7 receives selection of the electronic blackboard from the user. The electronic blackboard E21 displays each of the electronic blackboards E21 to E23 on the touch panel 74 in a thumbnail format. Here, since the photograph has been acquired in the electronic blackboard E21, the actual performance acquisition terminal 7 displays the remaining electronic blackboards E22 and E23 on the touch panel 74 in a selectable state.

In the following example, it is assumed that the user selects the electronic blackboard E23. The actual performance acquisition terminal 7 performs imaging in the imaging section 75. A monitor image F1 as illustrated in FIG. 15 is obtained by a camera constituting the imaging section 75. As illustrated in FIG. 16, the controller 73 of the actual performance acquisition terminal 7 superimposes an electronic blackboard image E231 of the electronic blackboard E23 on the monitor image F1 and displays it on the touch panel 74. The position at which the electronic blackboard image E231 is superimposed on the monitor image F1 may be set to, for example, the upper left of the monitor image F1 in the initial setting, and the position may be changeable in accordance with an operation of the user. The imaging is completed when the user performs a shutter operation.

When the imaging is completed, the controller 73 of the actual performance acquisition terminal 7 stores the photograph data 724 in which the electronic blackboard image is superimposed on the captured image, in the storage 72. That is, the controller 73 of the actual performance acquisition terminal 7 stores the photograph data 724 in which the electronic blackboard E23 is added in the storage 72.

As described above, in the water pipe construction management system 12, the management item is a photograph. The actual performance acquisition terminal 7 acquires the captured photograph data 724 as the actual performance information. The construction management information generator 255 generates the construction management information 928 by associating the photograph data 724 captured by the actual performance acquisition terminal 7 with the management position.

As a result, the photograph management, which is the actual performance management by the photograph, can be performed in association with the management position. Accordingly, the photograph management can be efficiently performed.

### [Embodiment 4]

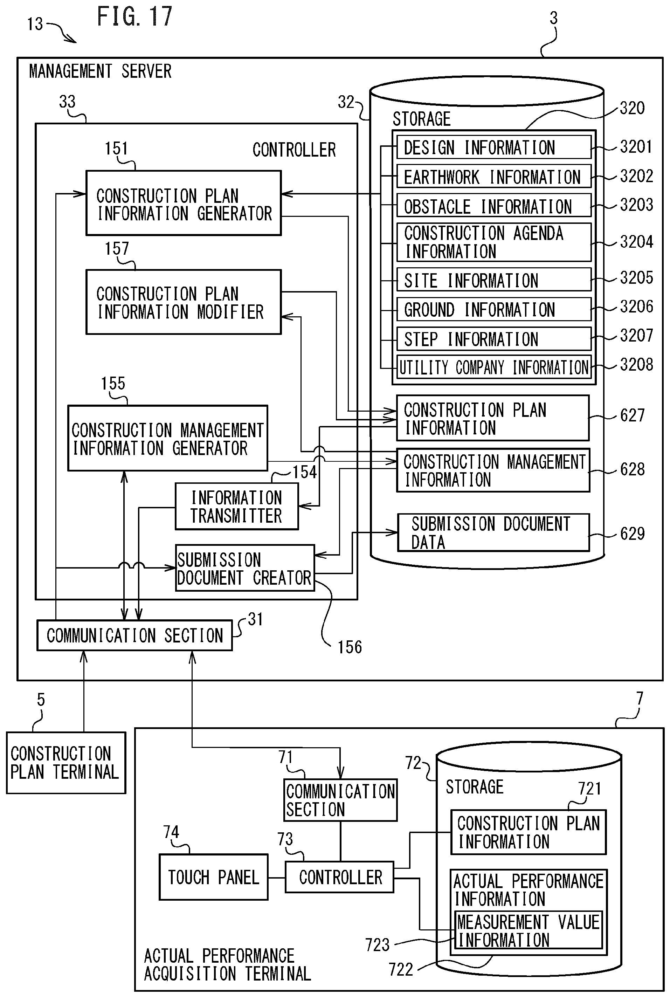

FIG. 17 is a functional block diagram illustrating a schematic configuration of a water pipe construction management system 13 according to Embodiment 4 of the present invention.

The water pipe construction management system 13 according to Embodiment 4 is different from the water pipe construction management system 11 according to Embodiment 2 in that the construction plan information 627 and the construction management information 628 are associated with the work range.

In the description of Embodiment 4, the detailed description of the parts common to the water pipe construction management system 11 according to Embodiment 2 will not be repeated.

### (Management Server)

### (Storage of Management Server)

The information 320 related to the construction plan stored in the storage 32 of the management server 3 further includes utility company information 3208. The utility company information 3208 includes information related to an identification ID of the water utility company. The information related to the identification ID of the water utility company includes, for example, a code uniquely assigned to each water utility company, a name of the water utility company, and the like. The utility company information 3208 is associated with the construction agenda information 3204. For example, the agenda of the water pipe construction in the construction agenda information 3204 is associated with the identification ID for the water utility company that orders the agenda of the water pipe construction.

### (Controller of Management Server)

The construction plan information generator 151 generates the construction plan information 627 by associating the information 320 related to the construction plan of the pipeline of the water pipes, which is the target of the water pipe construction, with the management item and the management position required in the as-built management for each predetermined section of the design pipeline included in the design information 3201. Specifically, the construction plan information generator 151 reads the information 320 related to the construction plan from the storage 32 for each predetermined section of the design pipeline included in the design information 3201, and generates the construction plan information 627. Accordingly, the construction plan information 627 is generated for each predetermined section.

The predetermined section is, for example, a section included in one piece of drawing data in the design pipeline. In the following, the drawing data related to the predetermined section in the design pipeline is referred to as section drawing data. The design pipeline includes at least one section drawing data. The predetermined section may be a section other than a section included in the one drawing data as long as the predetermined section is a predetermined section determined in advance in the design pipeline.

The section drawing data is associated with the water pipe construction indicated in the construction agenda information 3204. That is, the section drawing data is associated with the utility company information 3208 associated with the construction agenda information 3204.

The section drawing data includes construction section data related to at least one construction section. The construction section data is data for each construction section in the section drawing data. The construction section is a unit for managing the water pipe construction. In a plurality of construction sections, for example, the water pipe construction contractors who perform the water pipe construction may be different, the construction schedule may overlap, or different actual performance acquisition terminals that acquire construction actual performance information may be assigned as will be described later.

The construction section data includes work range data related to at least one work range. The work range data is data for each work range in the construction section data. The work range is a minimum unit for managing the water pipe construction. The work range may be determined based on the construction schedule or may be determined in accordance with the work content. For example, the work range may be a daily work range when the construction plan information is created, or may be a work range determined when the design information or the construction plan information is created.

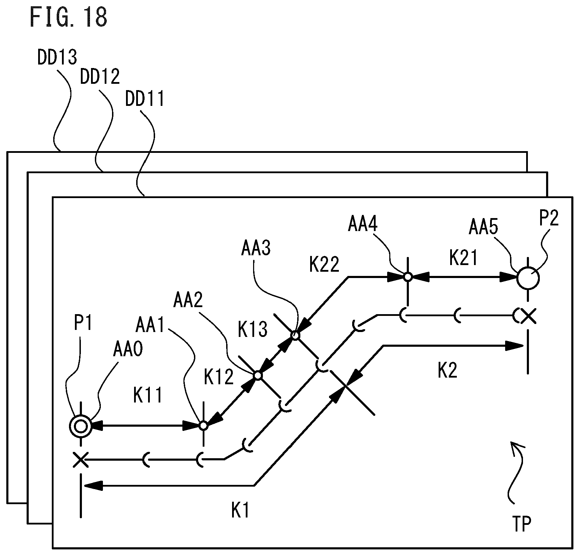

FIG. 18 is a diagram schematically illustrating the section drawing data. FIG. 18 illustrates an example of a case where three pieces of section drawing data DD11, DD12, and DD13 are included in the design information 3201 as the section drawing data. FIG. 18 illustrates an example of the section drawing data DD11. The section drawing data DD11 includes the construction section data related to two construction sections K1 and K2. The construction section K1 includes three work ranges K11, K12, and K13. The construction section K2 includes two work ranges K21 and K22. In FIG. 18, AA0 to AA5 indicate management positions, P1 indicates a start point of the design pipeline TP, and P2 indicates an end point of the design pipeline TP.

The construction plan information generator 151 generates the construction plan information for each work range by using the design information and the attribute data. Specifically, the construction plan information generator 151 generates the construction plan information 627 by using the information related to the design pipeline included in the design information 3201 and the various types of information (3201 to 3208) included in the information 320 related to the construction plan. The construction plan information 627 is generated in association with the work range. The construction plan information 627 associated with the work range is also associated with the construction section including the work range. In addition, the construction plan information 627 associated with the work range is also associated with the section drawing data including data related to the work range and the construction section. In addition, the construction plan information 627 associated with the work range is also associated with the construction schedule included in the step information 3207. That is, the construction plan information 627 is associated with the work schedule information that is information related to a schedule of work in the work range associated with the construction plan information 627.

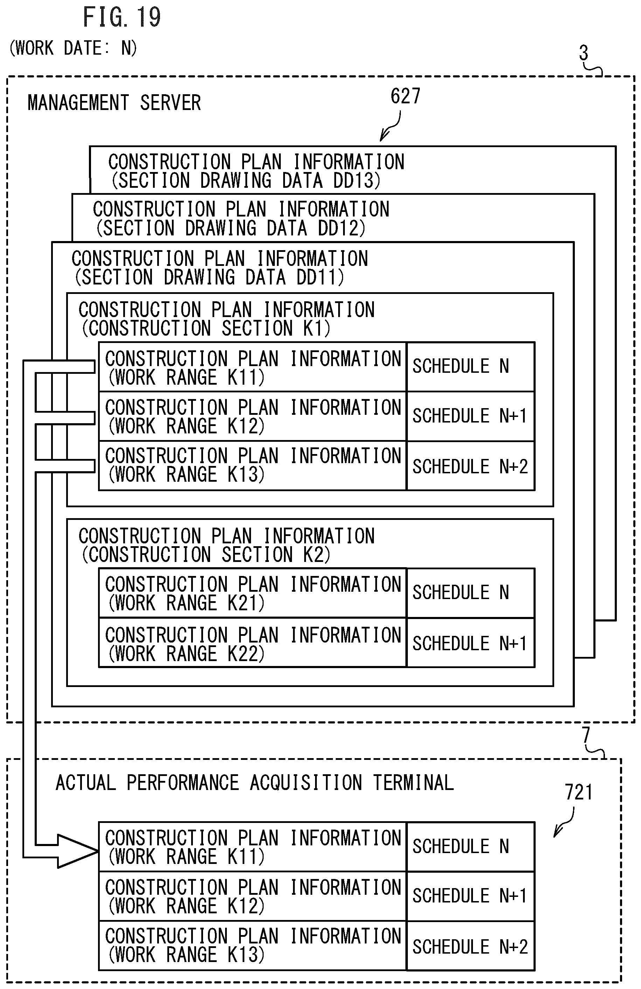

FIG. 19 is a diagram schematically illustrating the construction plan information 627 generated by the construction plan information generator 151. The construction plan information 627 is generated for each of the section drawing data DD11, DD12, and DD13 by the construction plan information generator 151. As illustrated in FIG. 19, for example, the construction plan information generated based on the section drawing data DD11 includes the construction plan information generated based on the construction sections K1 and K2. The construction plan information generated based on the construction section K1 includes the construction plan information generated based on the work ranges K11, K12, and K13. The construction plan information generated based on the construction section K2 includes the construction plan information generated based on the work ranges K21 and K22.

The construction plan information 627 generated by the construction plan information generator 151 is stored in the storage 32. In this case, the construction plan information 627 may be stored in the storage 32 for each section drawing data, may be stored in the storage 32 for each construction section, or may be stored in the storage 32 for each work range. In FIG. 19, an example in which the construction plan information is stored in the storage 32 for each section drawing data is illustrated.

The information transmitter 154 outputs the construction plan information 627 generated by the construction plan information generator 151 and stored in the storage 32 to the actual performance acquisition terminal 7 described below. Specifically, the information transmitter 154 reads out the construction plan information 627 from the storage 32 in association with the work range, and outputs the readout construction plan information 627 to the actual performance acquisition terminal 7 via the communication section 31. In the example illustrated in FIG. 19, on the work date: N, the information transmitter 154 reads out the construction plan information associated with the work ranges KK11, KK12, and KK13 on and after the construction schedule N from the storage 32 and transmits the readout construction plan information 627 to the actual performance acquisition terminal 7. The information transmitter 154 may transmit only the construction plan information associated with the work range KK1 1 of the construction schedule N which is the day of the work date N to the actual performance acquisition terminal 7.

The construction management information generator 155 acquires the actual performance information that is acquired by the actual performance acquisition terminal 7 and is associated with the work range, via the communication section 31. The construction management information generator 155 generates the construction management information 628 by associating the actual performance information acquired from the actual performance acquisition terminal 7 with the construction plan information 627. The construction management information generator 55 stores the generated construction management information 628 in the storage 32. The storage 32 stores the construction plan information 627 and the construction management information 628 in association with the work range, respectively.

The submission document creator 156 may create the submission document data 629 using the construction plan information 627 and the construction management information 628, at least one of which is associated with the construction section. In this case, the submission document creator 156 may create the submission document data 629 by using the construction plan information 627 or the construction management information 628 associated with the work range. In addition, the submission document creator 156 may create a daily report based on the actual performance information in the construction schedule N as the submission document, in accordance with the construction management information 628. The submission document creator 156 may create the submission document in the work section or the construction section for any period in accordance with the request from the construction plan terminal 5.

In addition, as illustrated in FIG. 17, the controller 33 further includes a construction plan information modifier 157. The construction plan information modifier 157 modifies the construction plan information 627 based on the actual performance information output from the actual performance acquisition terminal 7. Details of the construction plan information modifier 157 will be described later.

### (Actual Performance Acquisition Terminal)

The actual performance acquisition terminal 7 acquires the actual performance information 722 of the water pipe construction in accordance with the construction plan information acquired from the management server 3 as described above. Specifically, the actual performance acquisition terminal 7 acquires the actual performance information 722 corresponding to construction plan information 721 associated with the work range in accordance with the input of the site person in charge or the output from a detection device such as a sensor. Information related to the work date of the work range may be associated with the actual performance information 722 in addition to the measurement value information 723. The actual performance acquisition terminal 7 may be configured by the construction plan terminal 5.

The actual performance acquisition terminal 7 acquires the construction plan information 721 associated with the work range from the management server 3, acquires the actual performance information 722 corresponding to the construction plan information 721 and associated with the work range and the work date, and then outputs the actual performance information 722 to the management server 3.

### (Modification Processing of Construction Plan Information)

The construction plan information modifier 157 modifies the construction plan information 627 based on the construction management information 628 stored in the storage 32. In other words, the construction plan information modifier 157 modifies the construction plan information 627 based on the actual performance information transmitted from the actual performance acquisition terminal 7. For example, in a case where the actual performance information in the construction management information 628 indicates that the construction is progressing earlier than the scheduled plan in the construction plan information 627 or in a case of indicating that the construction is delayed, the construction plan information modifier 157 modifies the construction plan information 627 by using the construction management information 628. In this case, the construction plan information modifier 157 modifies the construction plan information 627 by using the construction management information 628 that is stored in the storage 32 and is associated with the work range.

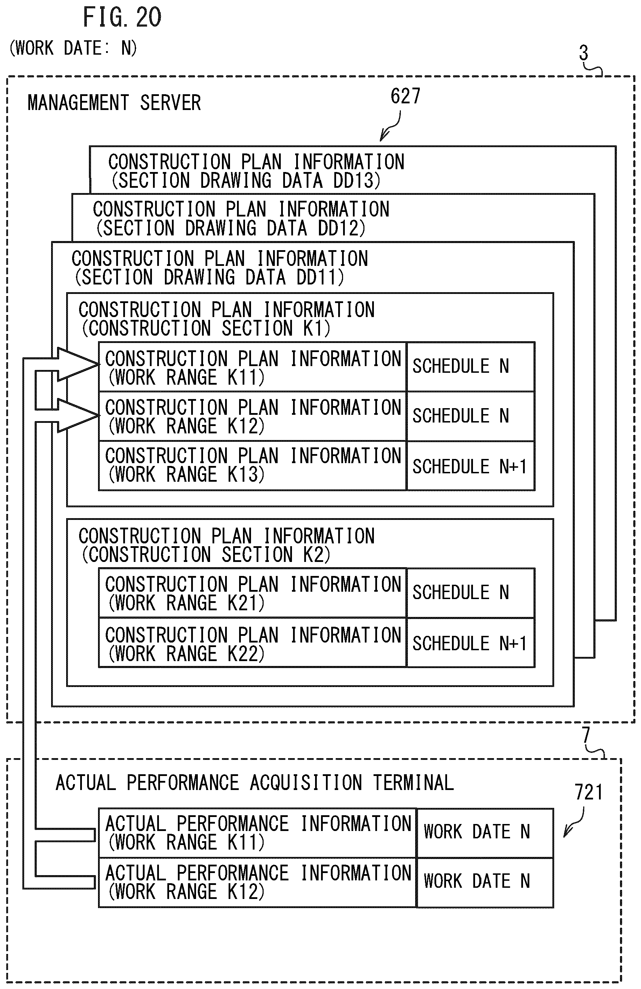

A specific example of the modification processing of the construction plan information 627 will be described with reference to FIGS. 19 and 20. FIG. 20 is a diagram schematically illustrating the modification processing of the construction plan information 627 by the construction plan information modifier 157.

Hereinafter, a case where the actual performance information in the construction management information 628 indicates that the construction is progressing earlier than the scheduled plan in the construction plan information 627 will be described.

Among the construction plan information 721 associated with the work range illustrated in FIG. 19, the construction plan information 721 associated with the work range K11 is scheduled for work on the construction schedule N, and the construction plan information 721 associated with the work range K12 is scheduled for work on the construction schedule N+1. In the example illustrated in FIG. 20, on the work date N, the actual performance acquisition terminal 7 acquires the actual performance information 722 corresponding to the construction plan information 721 associated with the work ranges K11 and K12 among the construction plan information 721 associated with the work ranges illustrated in FIG. 19. Furthermore, the work date N is associated with the actual performance information 722 corresponding to the construction plan information 721 associated with the work ranges K11 and K12. Therefore, in the work range K12, it means that work is completed on the construction schedule N earlier than the scheduled construction schedule N+1. The actual performance acquisition terminal 7 outputs the actual performance information 722 associated with the work ranges K11 and K12 to the management server 3.

In the management server 3, the construction plan information modifier 157 modifies the construction plan information 627 based on the actual performance information 722 transmitted from the actual performance acquisition terminal 7. Specifically, as described above, in the scheduled work range K12, since work is completed on the construction schedule N earlier than the construction schedule N+1, the construction plan information modifier 157 updates the construction schedule of the construction plan information 721 associated with the work range K12 to N based on the actual performance information 722 associated with the work range K12. Further, the construction plan information modifier 157 advances the construction schedule of the construction plan information 627 associated with the work range K13 of the construction schedule N+2 to N+1. The construction plan information modifier 157 may set a flag indicating that work is completed in the construction plan information 721 associated with the work range K12, instead of changing the construction schedule of the construction plan information 721 associated with the work range K12 in which work is completed earlier than the schedule.

In addition, a case where the actual performance information in the construction management information 628 indicates that the construction is delayed from the scheduled plan in the construction plan information 627 will be described below.

In this case, the construction plan information modifier 157 may postpone a construction schedule of an incomplete work range.

For example, in a case where the actual performance information 722 transmitted from the actual performance acquisition terminal 7 indicates that work in the work range K11 is not completed, the construction plan information modifier 157 modifies the construction schedule of the construction plan information 627 associated with the work range K13 to N+1. That is, the construction plan information modifier 157 modifies the construction schedule in the work range K11 to the "next day" of the originally scheduled N. In response to this, the construction plan information modifier 157 further sets the construction schedule of the construction plan information 627 associated with the work ranges K12 and K13 on and after the construction schedule N+1 by postponing the construction schedule by one day. That is, the construction schedule of the incomplete work range may be postponed in order.

In addition, for example, in a case where an obstacle such as a large rock appears in the work range K11 and in a case where the processing of the obstacle is not completed on the same day and takes several days to process, the construction plan information modifier 157 may schedule to postpone the construction schedule of the work range K11 on a day after N. That is, the construction schedule may be postponed by changing the order of the incomplete work ranges. Accordingly, in a case where there is an influence on the construction schedule of the subsequent work ranges K12 and K13, the construction plan information modifier 157 modifies the construction schedule of the work ranges K12 and K13.

As described above, the construction plan information modifier 157 advances or postpones the construction schedule of the construction plan information 627 by using the construction management information 628 as the actual performance information associated with the work range. That is, the construction plan information modifier 157 modifies the construction plan information 627 by using the construction management information 628.

As described above, in the water pipe construction, the construction plan information 627 is modified by using the construction management information 628 as the actual performance information associated with the work range, so that the modification of the construction plan information 627 can be easily performed. That is, the plan of the water pipe construction can be easily changed in accordance with the work range.

### [Other Embodiments]

Although the embodiments of the present invention are described above, the above-described embodiments are merely examples for implementing the present invention. Therefore, the present invention is not limited to the embodiments described above, and the above-described embodiments are able to be appropriately modified and implemented within a range not deviating from the gist thereof.

In each of the above-described embodiments, the water pipe construction management system 1 is a system that manages the water pipe construction. In addition, the management server 3 manages the water pipe construction. However, the configuration of each of the above-described embodiments can also be used to manage the pipeline construction of a sewer, agricultural water, or the like in addition to water (water supply). That is, the configuration of each of the embodiments can be realized as a pipeline construction management system, and a pipeline construction management method and a pipeline construction management program, both for controlling the pipeline construction management system. In this case, the management server is a server that manages the pipeline construction.

In each of the above-described embodiments, the as-built management table does not include the schematic diagram. However, the as-built management table may include the schematic diagram.

Although not particularly described in each of the above-described embodiments, the storage of the management server, the plan creation terminal, or the actual performance acquisition terminal can be realized by, for example, a storage device such as a volatile or non-volatile read only memory (RAM) or a random access memory (ROM). The storage can be realized by, for example, an internal or external storage device or a removable medium. As specifically exemplified, the storage is a cache memory and a main storage device. In addition, as specifically exemplified, the storage is an auxiliary storage device such as a solid state drive (SSD) or a hard disk (HDD).

Although not particularly described in each of the above-described embodiments, the controller of the management server, the plan creation terminal, or the actual performance acquisition terminal realizes various functions by executing a program by a computation device such as a central processing unit (CPU) or a micro processing unit (MPU). However, some or all of various functions realized by the controller may be realized in hardware by a dedicated processor, a computation circuit, or the like. In addition, the program may be capable of being stored permanently rather than only temporarily, and may be stored in a computer-readable storage medium. The storage medium may be included in the storage of the management server, the plan creation terminal, or the actual performance acquisition terminal. In addition, the program may be supplied to the management server, the plan creation terminal, or the actual performance acquisition terminal via a wired or wireless transmission medium.

Although not particularly described in each of the above-described embodiments, the management server may be realized by one or a plurality of computer devices.

In each of the above-described embodiments, the water pipe construction management systems 1, 11, 12, and 13 include the construction plan terminal 5 used by the planning person in charge U1 and the actual performance acquisition terminal 7 used by the site person in charge U2. However, the water pipe construction management system may further include a water utility company terminal used by the water utility company. The water utility company terminal may access the management server and may be able to refer to various types of data such as the construction plan information, the construction management information, or submission document data.

In each of the above-described embodiments, the construction management information generators 55, 155, and 255 generate the construction management information 328, 628, and 928 by associating the construction plan information 327, 627, and 927 and the actual performance information with the management positions that are management targets in the pipeline. However, the construction management information generator may not associate the construction plan information and the actual performance information with the management position that is a management target in the pipeline. For example, the construction management information generator may associate the construction plan information and the actual performance information with the map information.

In each of the above-described embodiments, the management server 3 includes the submission document creators 56, 156, and 256. However, the document creator may be omitted.

In each of the above-described embodiments, the actual performance acquisition terminal 7 includes the touch panel 74. However, the actual performance acquisition terminal may have a display device and an input device different from the touch panel.

In Embodiment 3, the actual performance acquisition terminal 7 adds the electronic blackboard 725 to the photograph data 724. However, the management server 3 may add the electronic blackboard 725 to the photograph data 724. More specifically, the description is as follows. The actual performance acquisition terminal 7 acquires image data on which the electronic blackboard image is not superimposed as the photograph data. The actual performance acquisition terminal 7 transmits the image data and the electronic blackboard corresponding to the image data to the management server 3. The management server 3 adds the electronic blackboard to the photograph data.

In Embodiment 3, the electronic blackboard creator 252 creates the electronic blackboard 952 to be added to the photograph data 724 based on the construction plan information 927. However, the electronic blackboard creator may be omitted.

In Embodiment 3, the work information management list generator 257 creates the work information management list 953, which is data of the list of the actual performance information 722 acquired in a predetermined construction period, based on the construction management information 928. However, the work information management list generator may be omitted.

In Embodiment 4, the management position AA0 and the management position AA3 are located at both ends of the construction section K1. In addition, the management position is located at both ends of each work section. However, the management position may not be located in at least one of both ends of the construction section. In addition, the management position may be located in the middle of the work section. The work section may include a plurality of management positions.

In Embodiment 4, the construction plan information and the construction management information are associated with the work range, respectively. However, the construction plan information may be associated with a parameter other than the work range. The construction management information may be associated with a parameter other than the work range.

In Embodiment 4, the management server 3 includes the construction plan information modifier 157. However, the management server of another embodiment may have the construction plan information modifier. A device other than the management server may have the construction plan modifier.

In Embodiment 4, the management server 3 generates the construction plan information 627 for each of the predetermined sections. However, the management server of another embodiment may generate the construction plan information for each of the predetermined sections.

### Industrial Applicability

The present invention can be used for a pipeline construction management system that manages pipeline construction, and the like.

### Description of Reference Numerals

1, 11, 12, 13: water pipe construction management system (pipeline construction management system)
3: management server
31: communication section
32: storage
3201: design information
3202: earthwork information
3203: obstacle information
3204: construction agenda information
3205: site information
3206: ground information
3207: step information
3208: utility company information
327, 627, 927: construction plan information
328, 628, 928: construction management information
329, 629, 929: submission document data
952: electronic blackboard
953: work information management list
33: controller
51, 151, 251: construction plan information generator
54, 154, 254: information transmitter
55, 155, 255: construction management information generator
56, 156, 256: submission document creator
157: construction plan information modifier
252: electronic blackboard creator
257: work information management list generator
5: construction plan terminal
7: actual performance acquisition terminal
71: communication section
72: storage
721: construction plan information
722 actual performance information
723: measurement value information
724: photograph data
725: electronic blackboard
726: work information management list
73: controller
74: touch panel
75: imaging section
DD11, DD12, DD13: section drawing data
K1, K2: construction section
K11, K12, K13, K21, K22: work range
AA0, AA1, AA2, AA3, AA4, AA5: management position
P1: start point
P2: end point
TP: design pipeline

## Claims

1. A pipeline construction management system that manages pipeline construction, the pipeline construction management system comprising:
a management server; and
an actual performance acquisition terminal configured to be communicable with the management server and to acquire data related to a construction actual performance corresponding to a management item for managing an actual performance in the pipeline construction, as actual performance information,
wherein the management server includes
a construction plan information generator configured to generate construction plan information by associating information related to a construction plan of a pipeline that is a target of the pipeline construction with the management item, and
a construction management information generator configured to generate construction management information by associating the actual performance information acquired by the actual performance acquisition terminal with the construction plan information.

2. The pipeline construction management system according to claim 1,
wherein the construction management information generator generates the construction management information by associating the construction plan information and the actual performance information with a management position that is a management target in the pipeline.

3. The pipeline construction management system according to claim 2,
wherein the management server further includes a work information management list generator configured to create data of a list of actual performance information acquired in a predetermined construction period based on the construction management information.

4. The pipeline construction management system according to claim 2,
wherein the management server further includes a document creator configured to create a document in which the actual performance information is associated with each management position in accordance with a predetermined format based on the construction management information.

5. The pipeline construction management system according to claim 2,
wherein the construction plan information includes a design value related to earthwork of the pipeline construction,
the data related to the construction actual performance is a measurement value corresponding to the design value, and
the construction management information generator calculates a difference between the design value and the measurement value included in the actual performance information acquired by the actual performance acquisition terminal, and generates the construction management information by associating the design value, the measurement value, and the difference with the management position.

6. The pipeline construction management system according to claim 2,
wherein the management item is a photograph,
the actual performance acquisition terminal acquires captured photograph data as the actual performance information, and
the construction management information generator generates the construction management information by associating the photograph data captured by the actual performance acquisition terminal with the management position.

7. The pipeline construction management system according to claim 6,
wherein the management server further includes an electronic blackboard creator configured to create an electronic blackboard to be added to the photograph data, based on the construction plan information, and
the construction management information generator generates the construction management information by associating the photograph data to which the electronic blackboard is added with the management position.

8. The pipeline construction management system according to any one of claims 1 to 6,
wherein each of the construction plan information, the actual performance information, and the construction management information is associated with a work range in the pipeline construction.

9. The pipeline construction management system according to claim 8,
wherein the construction plan information is associated with work schedule information that is information related to a schedule of work in the work range,
the actual performance acquisition terminal acquires the construction plan information from the management server, acquires actual performance information that corresponds to the construction plan information and is associated with the work range and the work schedule information, and then outputs the actual performance information to the management server, and
the management server modifies the construction plan information based on the actual performance information output from the actual performance acquisition terminal.

10. A management server that manages pipeline construction, the management server comprising:
a construction plan information generator configured to generate construction plan information by associating information related to a construction plan of a pipeline that is a target of the pipeline construction with a management item for performing management of an actual performance in the pipeline construction;
a communication section configured to be communicable with an actual performance acquisition terminal that acquires data related to a construction actual performance corresponding to the management item as actual performance information; and
a construction management information generator configured to receive the actual performance information from the actual performance acquisition terminal, and generate construction management information by associating the received actual performance information with the construction plan information.

11. The management server according to claim 10,
wherein the construction management information generator generates the construction management information by associating the construction plan information and the actual performance information with a management position that is a management target in the pipeline.

12. The management server according to claim 10 or 11, further comprising:
a document creator configured to create a document in which the actual performance information is associated with each management position in accordance with a predetermined format based on the construction management information.

13. A pipeline construction management method of controlling a pipeline construction management system that includes an actual performance acquisition terminal and a management server, and manages pipeline construction, the pipeline construction management method comprising:
a construction plan information generation step of causing the management server to generate construction plan information by associating information related to a construction plan of a pipeline that is a target of the pipeline construction with a management item;
a construction plan information transmission step of causing the management server to transmit the construction plan information to the actual performance acquisition terminal;
an actual performance information acquisition step of causing the actual performance acquisition terminal to acquire data related to a construction actual performance corresponding to the management item in the pipeline construction as actual performance information;
an actual performance information reception step of causing the management server to receive the actual performance information from the actual performance acquisition terminal; and
a construction management information generation step of causing the management server to generate construction management information by associating the actual performance information received from the actual performance acquisition terminal with the construction plan information.

14. The pipeline construction management method according to claim 13,
wherein in the construction management information generation step, the management server generates the construction management information by associating the construction plan information and the actual performance information with a management position that is a management target in the pipeline.

15. The pipeline construction management method according to claim 13 or 14, further comprising:
a document creation step of causing the management server to create a document in which the actual performance information is associated with each management position in accordance with a predetermined format based on the construction management information.

16. A pipeline construction management program for controlling a pipeline construction management system that includes an actual performance acquisition terminal and a management server, and manages pipeline construction, the pipeline construction management program causing the management server to execute:
construction plan information generation processing of generating construction plan information by associating information related to a construction plan of a pipeline that is a target of the pipeline construction with a management item;
construction plan information transmission processing of transmitting the construction plan information to the actual performance acquisition terminal;
actual performance information reception processing of receiving the actual performance information from the actual performance acquisition terminal that has acquired actual performance information including data related to a construction actual performance corresponding to the management item in the pipeline construction; and
construction management information generation processing of generating construction management information by associating the actual performance information received from the actual performance acquisition terminal with the construction plan information.

17. The pipeline construction management program according to claim 16,
wherein the construction management information generation processing includes processing of causing the management server to generate the construction management information by associating the construction plan information and the actual performance information with a management position that is a management target in the pipeline.

18. The pipeline construction management program according to claim 16 or 17,
wherein the pipeline construction management program causes the management server to further execute:
submission document creation processing of creating a document in which the actual performance information is associated with each management position in accordance with a predetermined format based on the construction management information.
